(19) Europäisches Patentamt
European Patent Office
Office européen des brevets

(11) **EP 0 711 093 B1**

(12) **FASCICULE DE BREVET EUROPEEN**

(45) Date de publication et mention
de la délivrance du brevet:
**24.07.2002 Bulletin 2002/30**

(51) Int Cl.⁷: **H04Q 11/00**, H04L 12/56

(21) Numéro de dépôt: **95402434.5**

(22) Date de dépôt: **02.11.1995**

(54) **Système de commutateur pour paquets optiques**

Vermittlungssystem für optische Pakete

Switching system for optical packets

(84) Etats contractants désignés:
**DE GB**

(30) Priorité: **04.11.1994 FR 9413202**

(43) Date de publication de la demande:
**08.05.1996 Bulletin 1996/19**

(73) Titulaire: **FRANCE TELECOM**
**75015 Paris (FR)**

(72) Inventeurs:
• **Guillemot, Christian**
  **F-22700 Perros-Guirec (FR)**
• **Loualiche, Slimane**
  **F-35510 Cesson Sevigne (FR)**
• **Clerot, Fabrice**
  **F-22700 Louannec (FR)**

(74) Mandataire: **Le Forestier, Eric**
**Cabinet Régimbeau**
**20, rue de Chazelles**
**75847 Paris cedex 17 (FR)**

(56) Documents cités:
EP-A- 0 503 464          EP-A- 0 547 836
FR-A- 2 672 172          US-A- 5 101 455

• IEEE INTERNATIONAL CONFERENCE ON
  COMMUNICATIONS '93, vol. 1, 23 Mai 1993 GEN
  VE CH, pages 578-583, XP 000371156 HAAS
  'Growability of the "Staggering Switch"
  architecture'

• IEICE TRANSACTIONS ON COMMUNICATIONS,
  vol. E77-B, no. 2, Février 1994 TOKYO JP, pages
  119-127, XP 000447102 MURAKAMI ET AL.
  'Overview of photonic switching systems using
  time-division and wavelength-division
  multiplexing'
• IEEE GLOBAL TELECOMMUNICATIONS
  CONFERENCE/GLOBECOM '92, vol. 3, 6
  Décembre 1992 ORLANDO US, pages 1901-1905,
  XP 000392891 SHARONY ET AL. 'Extension of
  classical rearrangeable and non-blocking
  networks to the wavelength dimension'
• EUROPEAN TRANSACTIONS ON
  TELECOMMUNICATIONS AND RELATED
  TECHNOLOGIES, vol. 4, no. 6, Novembre 1993
  MILANO IT, pages 671-679, XP 000433724
  MASETTI ET AL. 'Optical fiber buffer for
  high-performance broadband switching'
• INTERNATIONAL CONFERENCE ON
  COMMUNICATIONS, vol. 2, 23 Juin 1991
  DENVER US, pages 721-728, XP 000269589
  CISNEROS ET AL. 'A large ATM switch based on
  memory switches and optical star couplers'
• IEEE GLOBAL TELECOMMUNICATIONS
  CONFERENCE/GLOBECOM '91, vol. 2, 2
  Décembre 1991 PHOENIX US, pages 1230-1234,
  XP 000332854 TSUKADA ET AL. 'Ultrafast
  photonic ATM switch based on time-division
  broadcast-and-select network'
• PATENT ABSTRACTS OF JAPAN vol. 17 no. 386
  (E-1401) ,20 Juillet 1993 & JP-A-05 068048
  (NIPPON TELEGRAPH & TELEPHONE) 19 Mars
  1993,

**Description**

La présente invention concerne le domaine des communications optiques.

Plus précisément, la présente invention concerne le domaine des dispositifs de commutation de signaux optiques.

L'utilisation de signaux optiques pour l'acheminement d'informations offre des perspectives très intéressantes.

En particulier, les propriétés des fibres optiques en termes de bande passante, d'atténuation et d'insensibilité aux pertubations électromagnétiques, autorisent la réalisation de systèmes de transmission à très haut débit et de très bonne qualité de transmission. De plus, le développement récent de composants optiques tels que des amplificateurs optiques à semi-conducteurs ou à fibre dopée et des transpositeurs de longueur d'onde, permet d'envisager l'extension du rôle de l'optique de la transmission point à point vers des réseaux de télécommunication hauts débits à travers le partage efficace de la bande passante de la fibre optique ($\approx$ 10 térahertz) entre plusieurs utilisateurs.

On sait que les réseaux de télécommunication à fibres optiques requièrent différents moyens de traitement au niveau des noeuds du réseau et notamment des "commutateurs", c'est-à-dire des moyens aptes à orienter un signal optique d'entrée, arrivant sur une parmi plusieurs entrées potentielles, vers une voie de sortie choisie sélectivement parmi plusieurs voies de sortie disponibles.

Les commutateurs de signaux optiques seront très certainement des constituants essentiels des réseaux de télécommunication optique à venir.

Tous les opérateurs internationaux ainsi que les fabricants de matériel étudient aujourd'hui très activement la communication optique.

De nombreuses propositions ont déjà été formulées pour opérer une commutation rapide de signaux optiques.

En particulier on a déjà proposé de nombreux types de commutateurs permettant d'acheminer des informations sous forme optique, sans conversion opto-électronique, sur un réseau optique, entre un émetteur et un récepteur.

Plus précisément encore, la présente invention vise le domaine des réseaux conçus pour transmettre des signaux optiques organisés en paquets.

Les paquets optiques à commuter comportent généralement chacun une en-tête ou adresse d'aiguillage et une charge d'informations ou message utile. L'en-tête contient des informations relatives au routage du paquet tel que l'adresse du destinataire, des informations de service et de gestion, et un code correcteur d'erreur.

L'absence de véritable mémoire optique pose deux types de problème aux commutateurs optiques transparents, c'est à dire aux commutateurs sans conversion opto-électronique.

D'une part, l'information ne peut être stockée, mais seulement retardée dans des lignes à retard en fibre optique. Les conflits d'adresse se produisant lorsque plusieurs paquets souhaitent simultanément accéder à une même sortie doivent être résolus à l'aide de ces lignes à retard.

D'autre part, l'absence de mise en mémoire s'accompagne d'une absence de régénération des bits de la charge d'information. Celle-ci se dégrade par conséquent continuellement en termes de rapport signal à bruit à la traversée des composants actifs, limitant de fait la transparence effective du commutateur.

Les commutateurs optiques ont déjà donné lieu à une littérature très abondante.

Le document J.B. Jacob, J.M. Gabriagues, "Very high bit rate optical switch for ATM applications", commutation et transmission n° 2, 5 (1994) décrit par exemple un commutateur optique de paquets ATM (Mode de transfert asynchrone, Asynchronous Transfer Mode en anglosaxon). Dans son principe, ce commutateur résoud les conflits d'adresse en sortie après avoir effectué le choix de sortie par conversion de longueur d'onde. Les paquets en conflit, après avoir été codés sur une longueur d'onde correspondant à leur destination, accèdent à Q lignes à retard en fibres optiques, à travers un réseau de type Banian réalisé à partir de portes optiques. Ce réseau comprend plus précisément N coupleurs à une entrée et Q sorties, N.Q portes optiques et Q coupleurs à N entrées et une sortie. Chaque ligne à retard peut véhiculer au même instant plusieurs longueurs d'onde. Les sorties des lignes à retard sont connectées aux entrées d'un coupleur en étoile dont les sorties sont dirigées vers les sorties respectives du commutateur par l'intermédiaire de filtres optiques spécifiques. Du fait de la dégradation du signal dans le réseau d'accès aux lignes à retard, la valeur maximale du retard est de 16 fois la durée d'un paquet optique ou "temps paquet". Cette valeur ne permet pas d'atteindre un taux de perte de paquet suffisamment faible pour être compatible avec les critères retenus en commutation électronique en mode ATM. De plus, la dégradation du signal est telle que la traversée successive de plusieurs commutateurs par un même paquet est impossible, interdisant ainsi la conception d'un réseau optique transparent de paquets.

Le document S. Kuroyanagi "Photonic ATM Switching Network" référence 14B2 de Topical Meeting on Photonic Switching, Kobe, Japan, 12-14 Avril 1990, décrit une matrice de commutation photonique comportant : a) un module d'interface d'entrée, sur chacune des n entrées de la matrice, pour identifier les cellules arrivant à cette entrée, en lisant une étiquette de canal virtuel ou de faisceau virtuel contenue dans l'entête de la cellule, et pour convertir la longueur d'onde de chaque cellule en une longueur d'onde correspondant à une sortie de la matrice ; b) des sélectionneurs de cellules, constitués chacun d'un diffuseur et de filtre, pour distribuer les cellules vers les sorties de la matrice en fonction de leurs longueurs d'onde ; et c) une mémoire tampon optique pour chaque sortie, pour stocker dans cette mémoire tampon des cellules destinées à une même sortie et qui peuvent être en conflit pour accéder à cette sortie. Plus précisément, chacune de ces mémoires tampon comporte n mémoires optiques ayant une capacité égale à une cellule et pouvant être constituée d'une ligne à retard optique et un commutateur n x m utilisant la commutation par division spectrale. Ce commutateur n x m comporte des convertisseurs de longeur d'onde pour convertir la longueur d'onde de chaque cellule, cellule par cellule, un combineur, un diffuseur et des filtres accordables pour aiguiller chaque cellule dans l'une des mémoires optiques. Les mémoires optiques étant reliées en série, elles permettent de réaliser un retard compris entre 0 et m fois la durée d'une cellule.

Le document FR-A-2672172 décrit une autre variante reprenant le même principe d'une matrice de commutation photonique comportant n entrées et n sorties, pour commuter des données sous la forme de cellules de longueur fixe, multiplexées par un multiplexage temporel asynchrone, sur des fibres optiques, comportant :

- une pluralité de convertisseurs de longueur d'onde situés respectivement aux entrées de la matrice pour attribuer une longueur d'onde à chaque cellule appliquée à une entrée de la matrice,
- une mémoire tampon optique commune à toutes les sorties de la matrice pour stocker chaque cellule pendant une durée sélectionnable entre 0 et k.T où k est un nombre entier et où T est la durée d'une cellule,
- un étage d'aiguillage spatial comportant un filtre pour chaque sortie de la matrice, pour ne laisser passer vers une sortie donnée que les cellules ayant une longueur d'onde donnée,
- des moyens de commande pour commander les convertisseurs et la mémoire tampon en fonction d'informations de routage indiquant, pour chaque cellule, la sortie de la matrice à laquelle cette cellule est destinée, et pour sélectionner la durée de stockage de chaque cellule dans la mémoire tampon de manière à constituer une file d'attente pour chaque sortie, évitant des conflits entre deux cellules à commuter vers une même sortie,

dans laquelle la mémoire tampon comporte :

- K+1 lignes à retard procurant respectivement des retards 0 à k.T et ayant des sorties couplées à des entrées de l'étage d'aiguillage spatial,
- k+1 combineurs ayant chacun une sortie couplée à une entrée d'une ligne à retard et ayant n entrées,
- n diffuseurs ayant chacun une entrée constituant une entrée de la mémoire tampon et ayant k+1 sorties,
- (k+1)n portes optiques reliant chacune une sortie de l'un des n diffuseurs à une entrée de l'un des combineurs, et étant commandées par les moyens de commande de telle sorte que chaque diffuseur est relié à un seul combineur, à chaque instant.

Le document US-A-5005167 et le document TECHNICAL DIGEST, OPTICAL FIBER COMMUNICATION CONFERENCE, 2-7 Février 1992, vol. 5, page 58, San Jose, US, XP341592, A. Cisneros "Large scale ATM switching and optical technology" décrivent un commutateur optique comprenant un jeu d'émetteurs/codeurs sur une longueur d'onde donnée associés respectivement aux entrées, un coupleur en étoile, et un jeu de récepteurs/décodeurs accordables sur une longueur d'onde spécifique en sortie. Les conflits d'adresses sont gérés par déroutage en fonction des sorties disponibles.

Le document M. CALZAVARA et al. "Optical-fiber-loop memory for multiwavelength packet buffering in ATM switching applications", OFC 93, San Jose, USA, 1993, décrit une mémoire à recirculation. Cette mémoire comporte une boucle en fibre optique correspondant à un retard égal à un "temps paquet". Chaque circulation dans la boucle retarde le paquet optique d'un "temps paquet" au prix du passage dans un coupleur passif 2x2 et dans un amplificateur optique à semi-conducteur. La dégradation du signal dans cette boucle limite le nombre de recirculations à 12, alors qu'un taux de perte de $10^{-9}$ en demanderait environ 50.

Le même type de mémoire a été très récemment proposé dans le document W. PIEPER "Investigation of crosstalk interference in a fiber loop optical buffer", Electronics Letters 28, 435 (1994), avec des conditions de fonctionnement de l'amplificateur optique différentes. Le nombre de circulations du paquet expérimentalement démontré est porté à 23 avec des indications fortes tendant à prouver que ce nombre pourrait croitre jusqu'à 40. Là encore, la dégradation du signal est telle qu'un temps d'attente de l'ordre de 50 "temps paquet" semble difficile à atteindre et qu'elle pose de toute façon le problème de la cascadabilité de telles boucles à recirculation et donc des commutateurs qui les supporteraient.

Le document A.E. Eckberg et al., "Effects of output buffer sharing on buffer requirements in an ATDM packet switch", INFOCOM' 88, 459, 1988, propose une analyse mathématique permettant d'évaluer la distribution du nombre de portes de sortie occupées à un instant arbitraire donné dans un système de commutation de paquets optiques répondant au format ATDM multiplexage à division de temps asynchrone (Asynchronous Time Division Multiplexing en termes anglosaxons) exploitant un partage de la mémoire commune entre les portes de sortie.

Les documents EP-A-335562 et EP-A-574864 décrivent des commutateurs comprenant des moyens adaptés pour accumuler les paquets optiques devant suivre un même routage à travers le réseau, des moyens de compactage des agrégats ainsi formés, ainsi qu'au niveau de chaque sortie, des moyens aptes à expanser les agrégats et à séparer les différents paquets.

Le document US-A-4912706 décrit une autre variante de commutateur dans lequel les paquets regroupés en fonction de leur destination sont appliqués à une matrice d'entrées/sorties formée de coupleurs de sorte que chaque entrée puisse être couplée à l'une choisie des sorties.

Les documents EP-A-282071 et EP-A-334054 décrivent des matrices de commutateurs optiques contrôlés par un module de commande électronique.

Le document EP-A-223258 décrit un commutateur comprenant un multiplexeur optique d'entrée suivi d'un premier étage de commutation de longueur d'onde et d'un étage de commutation spatiale dont la sortie est associée à un second étage de commutation de longueur d'onde relié à un multiplexeur optique de sortie. Les étages de commutation de longueur d'onde et l'étage de commutation spatiale sont pilotés par un processeur central. Le système comprend en outre un générateur comprenant un multiplexeur de sortie apte à générer plusieurs longueurs d'ondes de référence.

Le document IEEE INTERNATIONAL CONFERENCE ON COMMUNICATIONS '93, vol. 1, 23 mal 1993 GENEVE CH, pages 578-583, XP 000371156 HAAS, "Growability of the "staggering switch" architecture" décrit tout d'abord une structure de commutateur optique à n entrées et n sorties, comprenant deux étages : un premier étage de distribution de dimension n x n et un deuxième étage de commutation de dimensions n x n, ainsi que n lignes de retard disposées entre les deux étages précités. Le document décrit ensuite un deuxième de mode de réalisation d'un commutateur optique à nq entrées et nq sorties comprenant deux q nxn interrupteurs interconnectés par le guide optique. Le document n'enseigne pas d'utiliser des lignes à retard pour cette variante. Enfin, le document propose une troisième variante comprenant un démultiplexeur en longueur d'ondes en entrée et un multiplexeur en longueur d'ondes en sortie. Là encore, il n'est pas prévu, semble-t-il, de lignes de retard.

Le document EP-A-0547836 enseigne un commutateur optique comparable au premier mode de réalisation du document CONFERENCE RECORD cité ci-dessus.

La présente invention a maintenant pour but de perfectionner les commutateurs de paquets optiques connus.

La présente invention a pour but principal de proposer un commutateur de paquets optiques qui permette de résoudre les conflits d'adresse à l'aide de lignes à retard en limitant au mieux le nombre de composants actifs vus par la charge d'information.

Un autre but de la présente invention est de proposer un commutateur de paquets optiques répondant aux critères définis pour les réseaux de paquets en mode de transfert asynchrone (ATM) à savoir : un taux de perte de paquet inférieur à $10^{-9}$ pour une probabilité moyenne de présence des paquets par port d'entrée inférieure à 0,8, les arrivées successives de paquets aux différents ports d'entrée étant non corrélées entre elles et dans le temps.

Ces buts sont atteints selon la présente invention grâce à un commutateur optique du type défini en revendication 1 annexée, laquelle est délimitée sous forme d'un préambule et d'une partie caractérisante, par rapport au document EP-A- 0547836.

Le troisième étage peut être entièrement passif. En variante le troisième étage peut le cas échéant être adapté pour définir l'ordre temporel des paquets accédant sur une même sortie, après le second étage.

D'autres caractéristiques, buts et avantages de la présente invention apparaîtront à la lecture de la description détaillée qui va suivre, et en regard des dessins annexés, donnés à titre d'exemples non limitatifs et sur lesquels :

- la figure 1 représente une vue schématique, sous forme de blocs fonctionnels, d'un commutateur optique conforme à la présente invention,
- la figure 2 représente une vue schématique, également sous forme de blocs fonctionnels, d'un commutateur optique conforme à une variante de réalisation de la présente invention,
- la figure 3 représente schématiquement les longueurs de lignes à retard associées aux différentes entrées,
- les figures 4 et 5 représentent, pour deux commutateurs conformes à la présente invention, la probabilité d'occupation de lignes à retard en fonction de la longueur des files d'attente,
- la figure 6 représente schématiquement un mode de réalisation d'un module de transposition de longueur d'onde et de moyens passifs d'aiguillage, conformes à la présente invention, utilisables en particulier dans le premier étage temporel,
- la figure 7 représente une première variante de réalisation d'un module de transposition de longueur d'onde associé à des moyens passifs d'aiguillage, utilisables en particulier dans le second étage spatial, et
- la figure 8 représente une seconde variante de réalisation d'un module de transposition de longueur d'onde associé à des moyens passifs d'aiguillage, utilisables dans le second étage spatial.

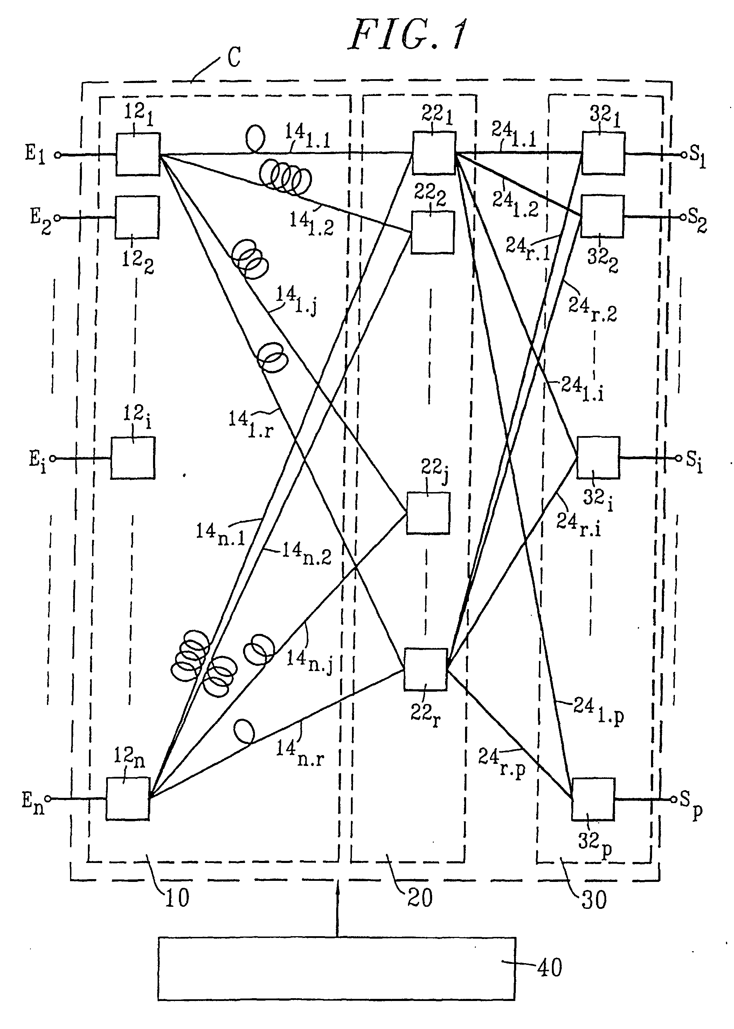

PREMIER MODE DE REALISATION REPRESENTE SUR LA FIGURE 1

On va tout d'abord décrire la structure générale du commutateur représenté sur la figure 1.

Le commutateur de paquets optiques C conforme à la présente invention représenté sur la figure 1 comprend N entrées référencées E1, E2, ... Ei, ... En et P sorties référencées S1, S2, ... Si, ...Sp. Comme indiqué précédemment, on peut avoir P=N; cependant cette condition n'est pas obligatoire. On peut avoir P différent de N, notamment P>N. Le commutateur C est organisé en réseau de Clos. Celui-ci comporte trois étages 10, 20, 30 et une mémoire à accès pseudo-aléatoire.

Plus précisément, le premier étage 10, temporel, comprend N modules d'aiguillage $12_1$ à $12_n$ et N groupes de r lignes à retard 14. Ces lignes à retard 14 sont formées de préférence chacune d'une fibre optique. Les N groupes de r lignes à retard 14 sont associés respectivement aux N modules d'aiguillage 12. Les N modules d'aiguillage $12_1$ à $12_n$ ont leur entrée reliée respectivement à une entrée E1 à En et sont adaptés pour diriger chaque paquet optique reçu sur une entrée E1 à En, vers une ligne à retard 14 choisie parmi les r lignes 14 accessibles en sortie de chaque module $12_1$ à $12_n$.

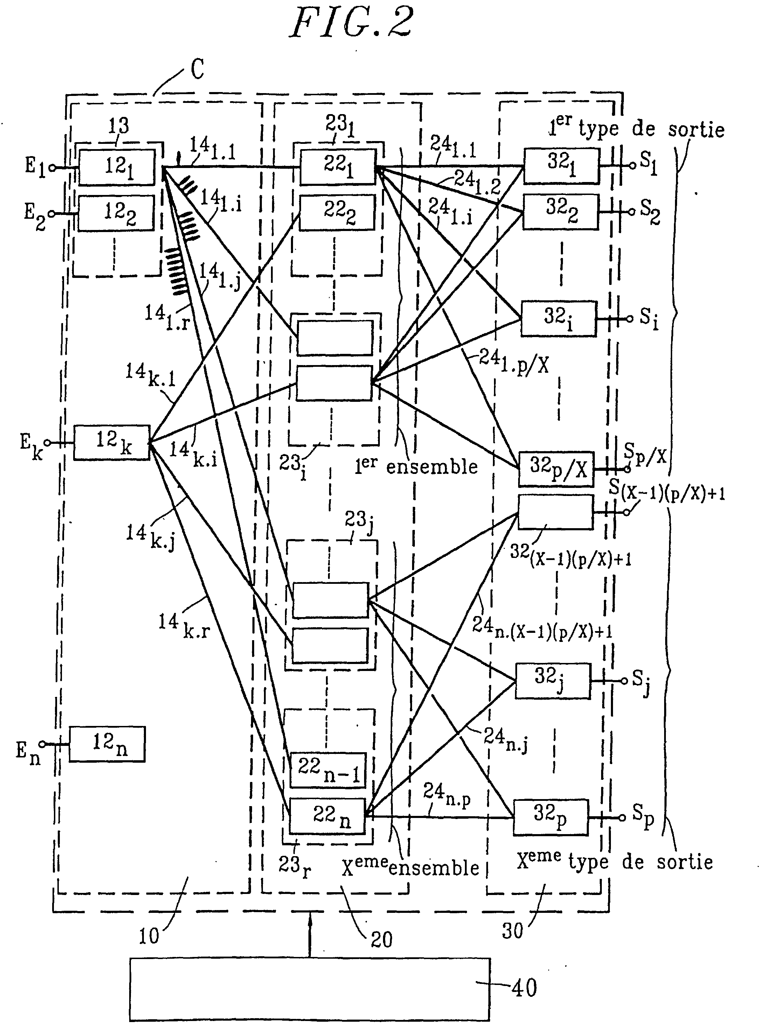

On verra par la suite en regard de la figure 2 que le premier étage 10 peut également être spatial selon certaines variantes de réalisation.

Sur la figure 1, les lignes à retard optiques associées au premier module $12_1$ sont référencées respectivement $14_1.1$, $14_1.2$, ... $14_1j$, ...$14_1.r$.

De façon similaire, les lignes à retard 14 associées au dernier module $12_n$ sont référencées $14_n.1$, $14_n.2$, ... $14_n.j$, ...$14_n.r$.

En outre, il est prévu dans le commutateur C, des moyens de lecture de l'en-tête de chaque paquet optique et d'identification du routage correspondant. Cette identification appliquée et interprétée par des moyens de contrôle 40 est exploitée pour piloter les moyens d'aiguillage 12 de sorte que chaque paquet optique reçu sur une entrée E1 à En soit dirigé vers une ligne à retard choisie 14 pour attribuer à chaque paquet un retard permettant de réorganiser temporellement les paquets afin d'éviter les conflits de routage.

Plus précisément encore, de préférence chaque module d'aiguillage 12 comprend un module 100 de transposition de longueur d'onde et un moyen passif d'aiguillage 110 sensible à la longueur d'onde.

Ainsi, selon un mode de réalisation préférentiel de l'invention, le premier étage 10 comprend N modules 100 de transposition de longueur d'onde, intégrés respectivement dans chacun des N modules d'aiguillage 12, chaque module 100 de transposition de longueur d'onde étant adapté pour transposer la longueur d'onde d'un paquet optique reçu sur l'une des N entrées E1 à En sur une longueur d'onde choisie parmi r longueurs d'onde potentielles, N groupes de r lignes à retard 14 associés respectivement à chaque module de transposition 100 et chaque module 12 comprend des moyens passifs d'aiguillage 110 sensibles à la longueur d'onde, placés respectivement en sortie de chaque module de transposition 100 pour diriger chaque paquet issu de ce module vers l'une des r lignes à retard associées 14, en fonction de sa longueur d'onde transposée.

En outre, de préférence, selon l'invention, dans chacun des N groupes, les r lignes à retard 14 définissent des retards optiques différents d'une ligne à l'autre.

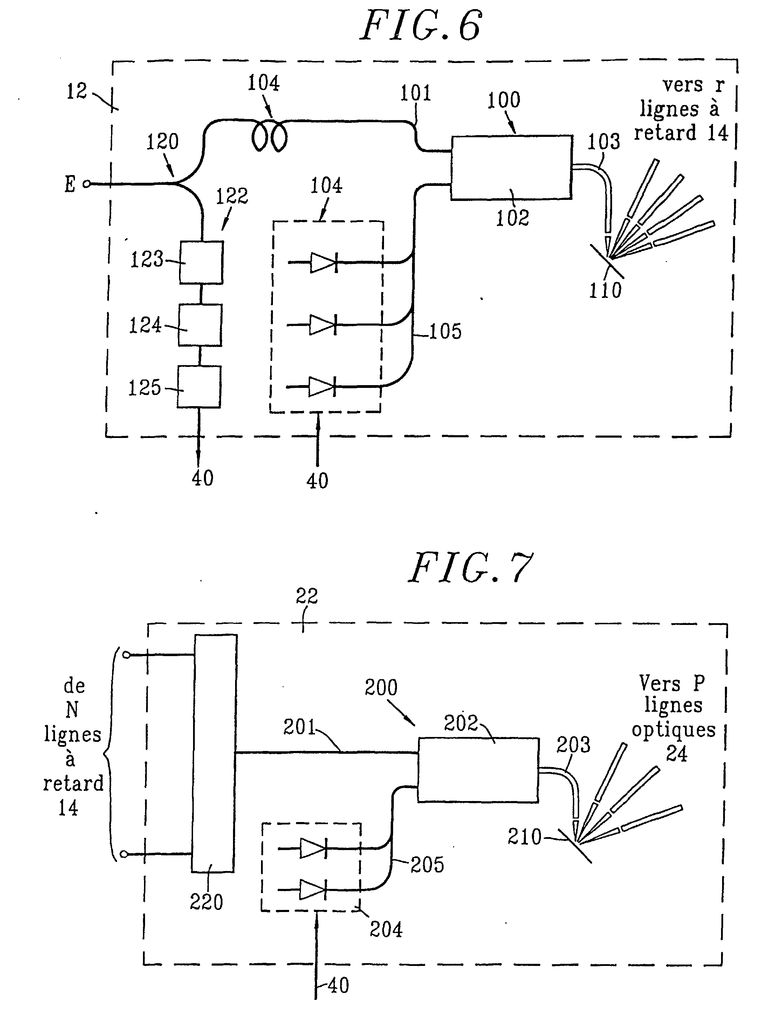

Un mode de réalisation préférentiel de modules de transposition de longueur d'onde 100 et des moyens passifs d'aiguillage 110 sensibles à la longueur d'onde, intégrés dans chaque module 12, sera décrit par la suite en regard de la figure 6.

Le second étage 20 est un étage spatial. Il est couplé en sortie des lignes à retard 14 provenant du premier étage 10 et adapté pour diriger sélectivement les paquets optiques vers la sortie S1 à Sp correspondant au routage déterminé par l'en-tête de chaque paquet. La liaison entre le second étage 20 et le troisième étage 30 est établie par r groupes de P fibres optiques 24. Ainsi, le second étage 20 comprend de préférence r groupes de P lignes optiques 24 associés à r modules d'aiguillage $22_1$, $22_2$, ...$22_i$, ... $22_r$.

Chaque module d'aiguillage 22 a une entrée couplée à la sortie de N fibres 14 provenant respectivement de chacun des N modules d'entrée 12. Par ailleurs, chaque module d'aiguillage 22 a P sorties couplées respectivement à une entrée de une parmi P lignes optiques 24 conduisant respectivement vers chaque sortie $S_1$ à $S_p$.

Sur la figure 1, les lignes optiques 24 associées au premier module d'aiguillage $22_1$ sont référencées respectivement $24_1.1$, $24_1.2$, ... $24_1.i$, ... $24_1.p$. D'autre part, les lignes optiques 24 associées au dernier module d'aiguillage $22_r$ sont référencées respectivement $24_r.1$, $24_r.2$, ... $24_r.i$, ...$24_r.p$.

Plus précisément encore, selon un mode de réalisation préférentiel de l'invention, le second étage 20 comprend ainsi r modules de transposition de longueur d'onde 200, couplés chacun en entrée, à travers un multiplexeur 220, à la sortie de N lignes à retard 14 provenant respectivement des N entrées, chacun des modules de transposition 200 étant adapté pour transposer la longueur d'onde d'un paquet optique ainsi reçu en provenance d'une ligne à retard 14 sur une longueur d'onde choisie parmi P longueurs d'onde potentielles, r groupes de P lignes optiques 24 associés respectivement en entrée à chaque module de transposition 200 du deuxième étage et en sortie à une parmi P sorties du commutateur, et r moyens passifs d'aiguillage 210 sensibles à la longueur d'onde, placés respectivement en sortie de chaque module de transposition 200 du deuxième étage pour diriger chaque paquet issu de ce module vers l'une des P lignes optiques 24 associées, en fonction de sa longueur d'onde transposée.

Le troisième étage 30 a pour fonction de coupler les lignes optiques 24 aux sorties S, le cas échéant pour définir l'ordre temporel des m paquets accédant sur une même sortie S après le second étage 20, m représentant la profondeur temporelle moyenne par entrée ou sortie en temps paquet sur laquelle le commutateur doit résoudre des conflits de routage. Ces m paquets peuvent provenir d'entrées E différentes. Dans ce cas, ils appartiennent nécessairement à des communications différentes et leur ordre est indifférent. Si ces paquets proviennent d'une même entrée, on ne souhaite pas modifier leur ordre d'arrivée, mais au contraire le conserver.

Par conséquent, les matrices du troisième étage 30 qui seraient indispensables à la réalisation effective de toutes les permutations sur l'ensemble N.m peuvent ici être omises puisque l'ordre d'arrivée des paquets au dernier étage 30 peut être conservé en sortie du commutateur.

Ainsi, selon l'invention, le troisième étage 30 est formé de préférence par P coupleurs ou multiplexeurs passifs $32_1$, $32_2$, ...$32_i$, ...$32_p$. Chaque coupleur ou multiplexeur 32 possède r entrées et une sortie. Les r entrées de chaque coupleur ou multiplexeur 32 sont reliées respectivement aux sorties de lignes optiques 24 provenant de r modules d'aiguillage 22 du second étage.

## VARIANTE DE REALISATION REPRESENTEE SUR LA FIGURE 2

On va maintenant décrire la variante de réalisation représentée sur la figure 2.

Cette variante destinée en particulier aux commutateurs de grande dimension, permet de réduire le nombre de longueurs d'onde nécessaire et notamment d'équilibrer sur ce point le premier et le second étages.

On retrouve sur la figure 2, un commutateur de paquets optiques C comprenant N entrées référencées E1, E2, ... Ek, ... En et P sorties référencées S1, S2, ... Si, ...Sp, organisé en réseau de Clos et comportant trois étages 10, 20, 30 et une mémoire à accès pseudo-aléatoire.

Là encore on peut avoir P=N, sans que cependant cette condition ne soit obligatoire.

Selon le mode de réalisation de la figure 2, le premier étage 10, temporel, comprend N modules d'aiguillage 12. Ces N modules d'aiguillage 12 sont organisés en N/X blocs 13 comprenant chacun X modules 12, pour respecter l'architecture d'un réseau de Clos. Chaque module 12 dispose de r longueurs d'onde pour accéder à r blocs du second étage 20. Le premier étage 10 comprend également N groupes de r lignes à retard 14. Les N groupes de r lignes à retard 14 sont associés respectivement aux N modules d'aiguillage 12. A l'intérieur de chacun de ces N groupes, les r lignes à retard 14 sont réparties en X ensembles de r/X lignes en moyenne si r/X non entier, pour permettre au niveau du premier étage 10, le choix d'un parmi X ensembles de sorties et dans chaque ensemble d'une parmi r/X en moyenne lignes à retard 14. Les N modules d'aiguillage $12_1$ à $12_n$ ont leur entrée reliée respectivement à une entrée E1 à En et sont adaptés pour diriger chaque paquet optique reçu sur une entrée E1 à En, vers une ligne à retard 14 choisie parmi les r lignes 14 accessibles en sortie de chaque module 12.

Sur la figure 2 qui correspond au cas où X=2, les lignes à retard $14_1.1$ à $14_1.i$ associées au premier module $12_1$ appartiennent à un premier ensemble, tandis que les lignes à retard optique $14_1.j$ à $14_1.r$ associées au même premier module $12_1$ appartiennent à un second ensemble.

De façon similaire, les lignes à retard $14_k.1$ à $14_k.i$ associées au module $12_k$ appartiennent au premier ensemble, tandis que les lignes à retard optiques $14_k.j$ à $14_k.r$ associées au même module $12_k$ appartiennent au second ensemble.

Le commutateur C de la figure 2 comprend des moyens de lecture de l'en-tête de chaque paquet optique et d'identification du routage correspondant, appliquée et interprétée par des moyens de contrôle 40 comme indiqué pour la figure 1.

Chaque module d'aiguillage 12 comprend également de préférence un module 100 de transposition de longueur d'onde et un moyen passif d'aiguillage 110 sensible à la longueur d'onde.

Ainsi, selon la figure 2, le premier étage 10 comprend N modules 100 de transposition de longueur d'onde, intégrés respectivement dans chacun des N modules d'aiguillage 12, chaque module 100 de transposition de longueur d'onde étant adapté pour transposer la longueur d'onde d'un paquet optique reçu sur l'une des N entrées E1 à En sur une longueur d'onde choisie parmi r longueurs d'onde potentielles, N groupes de r lignes à retard 14 associés respectivement à chaque module de transposition 100 et répartis chacun en X ensembles de r/X en moyenne lignes 14, et chaque module 12 comprend des moyens passifs d'aiguillage 110 sensibles à la longueur d'onde, placés respectivement en sortie de chaque module de transposition 100 pour diriger chaque paquet issu de ce module vers l'une des r lignes à retard associées 14, en fonction de sa longueur d'onde transposée.

Le second étage 20 est un étage spatial. Il comporte N modules de transposition 22 répartis en r blocs 23 comprenant chacun Y = N/r modules de transposition 22, avec r supérieur ou égal à 2.m.X - 1 où m est le paramètre associé à la fenêtre temporelle prise en compte. Chacun des modules 22 dispose de P/X longueurs d'onde pour un choix de sortie et est précédé de r lignes à retard 14.

Le second étage 20 est couplé en sortie des lignes à retard 14 provenant du premier étage 10 et adapté pour diriger sélectivement les paquets optiques vers la sortie S1 à Sp correspondant au routage déterminé par l'en-tête de chaque paquet.

Chaque entrée E possède un et un seul accès sur tout bloc 23.

On peut avoir X = Y. Cependant cette condition n'est pas impérative.

La liaison entre le second étage 20 et le troisième étage 30 est établie par N groupes de P/X fibres optiques 24. Ainsi, le second étage 20 comprend de préférence N groupes de P/X lignes optiques 24 associés à N modules d'aiguillage $22_1$, $22_2$, ...$22_i$, ... $22_n$.

Chaque module d'aiguillage 22 a une entrée couplée à la sortie de r fibres 14 provenant respectivement de r modules 12. Par ailleurs, chaque module d'aiguillage 22 a P/X sorties couplées respectivement à une entrée de une parmi P/X lignes optiques 24 conduisant vers une sortie S.

Sur la figure 2, les lignes optiques 24 associées au premier module d'aiguillage $22_1$ sont référencées respectivement $24_1.1$, $24_1.2$, ... $24_1.i$, ... $24_1.p/X$. D'autre part, les lignes optiques 24 associées au dernier module d'aiguillage $22_n$ sont référencées respectivement $24_n.(X-1)(p/X)+1$, $24_n.j$..... $24_n.p$.

Plus précisément au niveau du second étage 20, les N modules 22 sont répartis en X ensembles associés respectivement ausdits X ensembles de lignes 14 provenant du premier étage 10. Et dans chacun de ces X ensembles, les N/X modules 22 sont reliés à P/X sorties S respectives, par l'intermédiaire des lignes 24.

Les ensembles de N/X modules 22 du second étage 20 ne correspondent pas nécessairement à un nombre entier de blocs 23.

Les N/X premiers modules 22 sont attribués à un premier type de sortie, les N/X modules 22 suivants à un 2ème type de sortie et ainsi de suite pour X types de sortie. De cette façon, toute entrée E possède des accès sur des modules 22 associés à tous les types de sortie S.

Par exemple avec X=Y=2, on peut prévoir de relier la première moitié des modules d'aiguillage 22 du deuxième étage 20 à la première moitié des sorties S (ou en variante aux sorties paires S) et l'autre moitié des modules d'aiguillage 22 à la seconde moitié des sorties S (ou selon la variante précitée aux sorties impaires S). Cette disposition applicable en · particulier aux grands commutateurs permet de réduire le nombre de longueurs dondes nécessaire.

Plus précisément encore, selon un mode de réalisation préférentiel de l'invention conforme à la figure 2, le second étage 20 comprend ainsi r blocs 23 de Y modules de transposition de longueur d'onde 200, couplés chacun en entrée, à travers un multiplexeur 220, à la sortie de r lignes à retard 14 provenant respectivement de r entrées, chacun des modules de transposition 200 étant adapté pour transposer la longueur d'onde d'un paquet optique ainsi reçu en provenance d'une ligne à retard 14 sur une longueur d'onde choisie parmi P/X longueurs d'onde potentielles, Y.r=N groupes de P/X lignes optiques 24 associés respectivement en entrée à chaque module de transposition 200 du deuxième étage et en sortie à une parmi P/X sorties du commutateur, et Y.r=N moyens passifs d'aiguillage 210 sensibles à la longueur d'onde, placés respectivement en sortie de chaque module de transposition 200 du deuxième étage pour diriger chaque paquet issu de ce module vers l'une des P/X lignes optiques 24 associées, en fonction de sa longueur d'onde transposée.

Bien sur en prenant Y=X=1, on retrouve le mode de réalisation de la figure 1 : chaque module de transposition 200 est adapté pour transposer la longueur d'onde d'un paquet optique reçu en provenance d'une ligne à retard 14 sur une longueur d'onde choisie parmi P longueurs d'onde potentielles et il est prévu N groupes de P lignes optiques 24 associées respectivement en entrée à chaque module de transposition 200 du deuxième étage et en sortie à l'une des P sorties du commutateur, les N moyens passifs d'aiguillage 210 sensibles à la longueur d'onde étant placés respectivement en sortie de chaque module de transposition 200 du deuxième étage pour diriger chaque paquet issu de ce module vers l'une des P lignes optiques 24 associées en fonction de sa longueur d'onde transposée.

De façon comparable à la figure 1, le troisième étage 30 a pour fonction de coupler les lignes optiques 24 aux sorties S, le cas échéant pour définir l'ordre temporel des m paquets accédant sur une même sortie S après le second étage 20.

Le troisième étage 30 de la figure 2 peut être formé de P coupleurs ou multiplexeurs passifs $32_1$, $32_2$, ...$32_i$, ... $32_p$. Chaque coupleur ou multiplexeur 32 possède N/X entrées et une sortie. Les N/X entrées de chaque coupleur ou multiplexeur 32 sont reliées respectivement aux sorties de lignes optiques 24 provenant de N/X modules d'aiguillage 22 du second étage. Suivant l'architecture d'un réseau de Clos, les P sorties S sont regroupées en P/X blocs de X modules 32 correspondant à X types de sorties tous différents.

On rappelle que comme indiqué précédemment, et comme celà est illustré sur la figure 2, les liaisons définies entre les différents modules des trois étages 10, 20 et 30, par l'intermédiaire des lignes à retard 14 et des lignes optiques 24, permettent à un signal arrivant sur n'importe quelle entrée E d'accéder sur n'importe quelle sortie S.

Ceci est du en particulier au fait que chaque module d'entrée 12 a le choix parmi X ensembles de sorties, c'est à dire X ensembles de lignes à retard 14, lesquels X ensembles de sorties ou lignes à retard peuvent conduire respectivement par l'intermédiaire des modules 22 du second étage, des lignes 24 et des modules de sortie 32, respectivement à X groupes différents de P/X sorties S

Ainsi, si les N/X premiers modules 22 du second étage 20 sont reliés aux P/X premiers modules 32 du troisième étage 30 et les N/X derniers modules 22 du second étage 20 sont reliés aux P/X derniers modules 32 du troisième étage 30, un même module d'entrée 12 est relié à la fois aux N/X premiers modules 22 et aux N/X derniers modules 22 du second étage 20.

Si l'on souhaite équilibrer en nombre de longueurs d'onde, le premier étage 10 et le second étage 20, on pose r=N/X. Comme r>2.m, on a nécessairement X entier et $X < (N/2m)^{1/2}$.

Pour les commutateurs à N entrées et P sorties, le nombre r/X de lignes à retard accessibles dans chacun des X ensembles, à la sortie de chacun des modules d'entrée 12, reste déterminé par le paramètre m d'un commutateur N entrées et N sorties.

DETERMINATION DES RETARDS

On a indiqué précédemment qu'à chaque entrée E1 à En, était associée un choix parmi X ensembles de sorties 14 et pour chaque ensemble un choix parmi r/X en moyenne retards possibles grâce aux N groupes de r lignes à retard 14.

Chacun de ces choix doit correspondre à un nombre entier de "temps paquet", en raison du fonctionnement synchrone du commutateur. Ainsi, chaque fibre optique composant une ligne à retard 14 définit un retard égal à un nombre entier de temps paquet.

Par ailleurs, l'ensemble des lignes à retard 14 du commutateur contient les P files d'attente correspondant aux P sorties S1 à Sp. La longueur maximale d'une de ces files d'attente sous une charge moyenne par entrée de 0,8 définit le retard maximal que peut subir un paquet et donc la longueur maximale de lignes à retard. Cette valeur correspond à la taille des mémoires associées à chaque sortie S1 à Sp des commutateurs résolvant les conflits d'adresses en sortie.

Pour trois commutateurs ayant un nombre N d'entrées/sorties égal respectivement à 16, 32 et 64, la taille L de cette mémoire doit être au minimum égale respectivement à 41, 43 et 44.

Par conséquent, chaque entrée E possède un choix parmi X ensembles de sorties 14 et dans chacun de ces ensembles r/X en moyenne choix de retards compris entre 1 et environ L "temps paquet", grâce à X ensembles de r/X en moyenne lignes à retard 14 disponibles en sortie de chaque module d'aiguillage 12 et définissant des retards qui s'échelonnent entre 1 et environ L "temps paquet".

DIMENSION D'UNE FILE D'ATTENTE PAR SORTIE POUR UN COMMUTATEUR NxN

Ce paramètre donne la longueur maximale, mesurée en paquet, de la file d'attente que l'on peut être amené à former pour une sortie quelconque si l'on veut garantir un taux de perte donné sous une charge donnée en trafic uniforme (voir M.G. Hluchyj & M.J. karol, Queueing in High-Performance Packet Switching in I.E.E.E. Journal on selected areas in communications, vol. 6, n°9, 1988).

Soit L la taille maximale de la file d'attente associée à une sortie d'un commutateur NxN. Soit p la charge par entrée (probabilité qu'un paquet soit présent sur une entrée quelconque).

La probabilité de perte de paquet est donnée par :

$$P = 1 - [1-a_0.q_0]/p$$

avec

$$q_0 = 1/[1+\Sigma_{(i=1,L)}q_i]$$

$$q_1 = [1-a_1]/a_0 - 1$$

$$q_i = [(1-a_1).q_{i-1}] / [a_0.q_0] - \Sigma_{(k=2, Min(i,N))}a_k.q_{n-k}/a_0 \quad i=2,L$$

$$a_k = C_N k.(p/N)^k.(1-p/N)^{N-k} \qquad k=0,N$$

Pour que le commutateur ne reste jamais inactif, il est nécessaire que l'ensemble des lignes à retard 14 recouvre tous les "temps paquets" compris entre 1 et L.

Enfin, chaque module de transposition 22 du second étage 20 reçoit les paquets provenant de r lignes à retard 14.

Le traitement séquentiel des paquets requièrt d'interdire l'association de lignes à retard 14 de même longueur à un même transpositeur 22. Pour cette raison, les r lignes à retard 14 provenant du premier étage 10 et couplées à un même module 22 du second étage définissent des retards optiques différents entre eux.

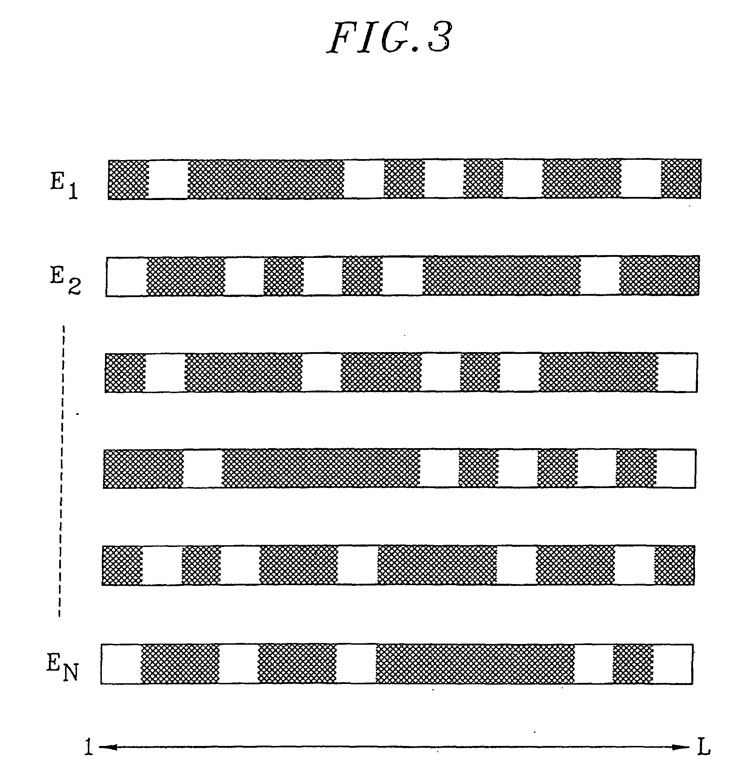

Plus précisément encore, les r lignes à retard 14 provenant de r entrées sont affectées successivement à chaque transpositeur 22 du second étage par exemple par permutation circulaire de pas Y. Une telle permutation est illustrée schématiquement sur la figure 3. Sur cette figure, l'axe des abscisses représente les longueurs des lignes à retard 14 associées aux différentes entrées, tandis que celles-ci sont portées en ordonnées. Sur la figure 3, chaque carré blanc défini un des r choix de longueur accessibles à un paquet provenant de l'entrée portée en ordonnée.

Pour X=1, la permutation circulaire peut être ainsi définie : le premier module de transposition $22_1$ est précédé de la ligne à retard $14_1.1$ la plus courte de l'entrée E1 jusqu'à la ligne à retard $14_n.1$ la plus longue de l'entrée n; le second transpositeur $22_2$ du second étage reçoit la ligne à retard la plus longue $14_12$ de l'entrée E1, la ligne à retard la plus courte de la seconde entrée E2 jusqu'à l'avant dernière ligne à retard $14_n2$ en terme de longueur de l'entrée En, et ainsi jusqu'au dernier module de transposition 22r.

Pour X>1, à toute entrée Ek est attribuée la ligne à retard 14 la plus courte précédant le module 22k du second étage, puis la seconde ligne à retard en terme de longueur du module 22 k+Y du second étage et ainsi de suite en procédant par saut de Y modules 22 pour chaque incrément sur la longueur de la ligne à retard 14.

Au premier étage 10, le choix de dimension r se décompose en un choix parmi X groupes de sorties et un choix parmi r/X (en moyenne) retards. Au 2ème étage 20, les N/X premiers modules 22 correspondent au groupe 1 de P/X sorties, les N/X modules 22 suivants au groupe 2 de P/X sorties, etc ... Soit le module i du second étage. Le type de sorties qu'il adresse est :

$$x_i = E((i-1).X/N)+1 \qquad (x_i=1,X),$$

relation dans laquelle "E" représente la partie entière.

Les sorties qu'il peut accéder sont données par :

$$s_i = x_i + (q-1).X \qquad (q=1,P/X),$$

si l'on considère des types de sortie interdigités, par exemple deux types de sorties alternées respectivement paires et impaires ou

$$s_i = (x_i -1) (P/X) +q \qquad (q=1,P/X),$$

si l'on considère que chaque type de sortie correspond à une suite continue de sorties, non interdigités d'un type de sortie à l'autre.

Il est précédé de r lignes à retard 14 associées aux entrées :

$$k = [i-p.Y-1]_N + 1 \qquad (p=0,r-1).$$

Inversement, l'entrée $E_k$ adresse les modules i du 2ème étage à travers les lignes à retard :

$$i = [k + p.Y-1 ]_N +1 \qquad (p=0,r-1).$$

La longueur des lignes à retard croit avec p et correspond à un nombre entier de paquets compris entre 1 et L

Dans les deux relations ci-dessus la fonction $[\ ]_N$ signifie "Modulo N".

En dehors de ces contraintes, le choix des lignes à retard doit être fait aléatoirement afin de ne pas biaiser ce choix. Dans ce sens, l'ensemble des lignes à retard 14 du commutateur définit une mémoire à accès pseudo-aléatoire.

La structure des moyens 40 contrôlant les modules de transposition 12 et 22 pour résoudre des conflits d'adresse peut faire l'objet de nombreuses variantes de réalisation et ne sera donc pas décrite par la suite.

Pour résoudre les conflits d'adresse, ces moyens de contrôle 40 doivent prendre en compte les conflits apparaissant lorsque plusieurs paquets souhaitent simultanément une même sortie d'une part, et les conflits apparaissant lorsqu'un paquet souhaite une sortie pour laquelle sont en attente des paquets ayant été en situation de conflit antérieurement. Sur cette base, les moyens de contrôle 40 doivent piloter les moyens d'aiguillage 12 et 22 associés aux lignes à retard 14 pour réarranger les paquets dans le temps en regard de l'ordre temporel dans lequel ils ont accédé au commutateur pour un port d'entrée quelconque de façon qu'ils accèdent séquentiellement à la sortie désirée.

La profondeur temporelle moyenne m sur laquelle ce réarrangement doit être effectué est définie par le taux de perte de paquet admissible. En effet, un taux de perte nul correspondrait à un réarrangement temporel portant sur un nombre de "temps paquet" non borné, puisque l'évènement où tous les paquets accédant au commutateur souhaiteraient constamment une même sortie a une probabilité non nulle sous un traffic uniforme et stationnaire : l'accroissement du nombre de paquets en souffrance est alors de n-1 par "temps paquet".

La taille de la mémoire d'un tel commutateur nécessaire pour gérer les paquets sur une profondeur temporelle moyenne m pour l'ensemble des entrées a été évaluée pour un commutateur à mémoire partagée dans l'approximation où la file d'attente globale est la somme de files d'attente par sortie indépendante. Considérer des files d'attente par sortie suppose que le commutateur est à même d'acheminer les paquets vers leur sortie en dépit des conflits d'adresse, le problème se réduisant alors à la réalisation de files d'attente pour chaque sortie. Cette gestion des conflits d'adresse est optimale en terme de files d'attente, puisque le commutateur réalise avec une efficacité maximale sa fonction de permutation spatiale, indépendamment des ré-organisations temporelles rendues nécessaires par l'écoulement séquentiel des paquets sur chaque sortie. Par contre, considérer que les files d'attente par sortie sont indépendantes est une approximation. En effet, lorsqu'un paquet souhaite une sortie, on sait qu'il ne veut pas accéder à une autre : c'est cette information qui n'est pas prise en compte dans l'approche par file d'attente indépendante. L'approximation utilisée est d'autant meilleure que la taille du commutateur considéré est grande et la surévaluation conséquente du paramètre m reste inférieure à 15% pour N supérieur à 16, comme l'indique le document précité Eckberg et al.

A titre d'exemple, pour trois tailles de commutateur dont le nombre N d'entrées/sorties est respectivement égal à 16, 32 et 64, le paramètre m définissant la profondeur temporelle moyenne par entrée ou sortie sur laquelle les permutations temporelles de paquets doivent être effectuées est respectivement égal à 8, 6 et 5 pour un taux de perte de $10^{-9}$ et une charge de 0,8.

## DIMENSION DE LA MEMOIRE D'UN COMMUTATEUR NXN A MEMOIRE PARTAGEE

La mémoire d'un commutateur à mémoire partagée contient l'ensemble des files d'attente associées aux différentes sorties d'un commutateur. Par conséquent, le nombre de paquets en attente est égal à la somme des files d'attente pour chaque sortie. Soit M la taille de cette mémoire.

Soit Yi le nombre de paquets en attente pour la sortie i. Soit A le nombre total de paquets en attente dans le commutateur :

$$\text{Probabilité } [\, A=a \,] = \text{Probabilité } [\Sigma_{(i=1,N)} \; Y_i = a].$$

Dans l'approximation où les files d'attente aux différentes sorties sont indépendantes, les variables aléatoires Yi sont indépendantes. Dans cette approximation,la loi de probabilité de toute variable Yi est donnée par:

$$\text{Probabilité } [Y_i = n] = q_n . q_0 \qquad n=1,M$$

$$\text{Probabilité } [Y_i = 0] = q_0$$

Dans ces expressions $q_0$ et $q_n$ sont obtenus par les formules données antérieurement dans l'exposé de la dimension d'une file d'attente par sortie pour un commutateur NxN, en remplaçant L par M. La probabilité de perte est évaluée par

$$\text{Probabilité } [X = \Sigma_{(i=1,N)} \; Yi > M]$$

Les approximations utilisées sont licites dès que N est supérieur à 16 (voir Eckberg et al. INFOCOM'88, 459 (1988). Le paramètre m permettant de dimensionner le réseau de Clos pour un commutateur de taille donnée N et pour une probabilité de perte donnée est obtenu par :

**10**

m entier et m ≥ 1 + M/N

Chaque matrice du commutateur conforme à l'invention représente un réseau de connexion non bloquant. Pour que le réseau de Clos lui-même soit non bloquant, le paramètre r qui est égal au nombre de blocs de modules du deuxième étage 20 doit être supérieur ou égal à 2mX-1.

Au niveau de chaque module d'entrée 12, l'étiquette de chaque paquet optique est analysée après conversion opto-électronique. L'unité de commande 40 du commutateur C détermine les retards attribués à chaque paquet en fonction des sorties demandées et de l'état des files d'attente de façon à minimiser le retard encouru par chaque paquet, sachant que chaque transpositeur et chaque sortie ne peut recevoir qu'un paquet par "temps paquet", et en veillant à conserver l'ordre d'arrivée des paquets pour tout couple entrée/sortie.

Ainsi, une partie du signal d'entrée est prélevée pour la lecture d'étiquette, au niveau de chaque module d'entrée 12. Le signal restant accède au premier étage de transposition contenu dans le module 12 où le cas échéant, l'étiquette peut être également effacée. Dans ce cas, une nouvelle étiquette est écrite dans le second étage de transposition 20.

PREMIER EXEMPLE DE REALISATION D'UN COMMUTATEUR 16x16

Pour un commutateur à 16 entrées et 16 sorties, le paramètre m vaut 8 et par conséquent le paramètre r doit être supérieur à 15.

On peut prendre par exemple r égal à 16 pour utiliser 16 longueurs d'ondes tant au niveau du premier étage 10, qu'au niveau du second étage 20. Le commutateur C comporte donc 32 modules de transposition, à raison de 16 modules dans le premier étage 10 et 16 modules dans le second étage 20, chaque module opérant sur 16 longueurs d'ondes.

Plus précisément selon ce mode de réalisation particulier et non limitatif de la présente invention, le premier étage 10 comprend N= 16 modules de transposition de longueur d'onde 100, chacun apte à transposer la longueur d'onde d'un paquet optique reçu sur l'une des N=16 entrées E sur une longueur d'onde choisie parmi r=16 longueurs d'ondes potentielles, N=16 groupes de r=16 lignes à retard 14 associés respectivement à chaque module de transposition 100 et N=16 moyens passifs d'aiguillage 110 sensibles à la longueur d'onde, placés respectivement en sortie de chaque module de transposition 100 pour diriger chaque paquet issu de ce module vers l'une des r=16 lignes à retard 14 associées, en fonction de sa longueur d'onde transposée, le second étage 20 comprend 1 ensemble de r=16 modules 200 de transposition de longueur d'onde couplés chacun en entrée, grâce à un multiplexeur 220, 16 vers 1, à la sortie des N=16 lignes à retard 14 provenant respectivement des N=16 entrées, chacun des r=16 modules de transposition 200 du second étage 20 étant adapté pour transposer la longueur d'onde d'un paquet optique ainsi reçu en provenance d'une ligne à retard 14 sur une longueur d'onde choisie parmi P=16 longueurs d'ondes potentielles, r=16 groupes de P=16 lignes optiques 24 associées respectivement en entrée à chaque module de transposition 200 du deuxième étage 20 et en sortie à P=16 sorties S du commutateur et r=16 moyens passifs d'aiguillage 210 sensibles à la longueur d'onde placés respectivement en sortie de chaque module de transposition 200 du deuxième étage 20, pour diriger chaque paquet issu de ce module 200 vers l'une des P=16 lignes optiques associées 24, en fonction de sa longueur d'onde transposée et le troisième étage 30 comprend P=16 coupleurs ou multiplexeurs passifs 32 à r=16 entrées et une sortie.

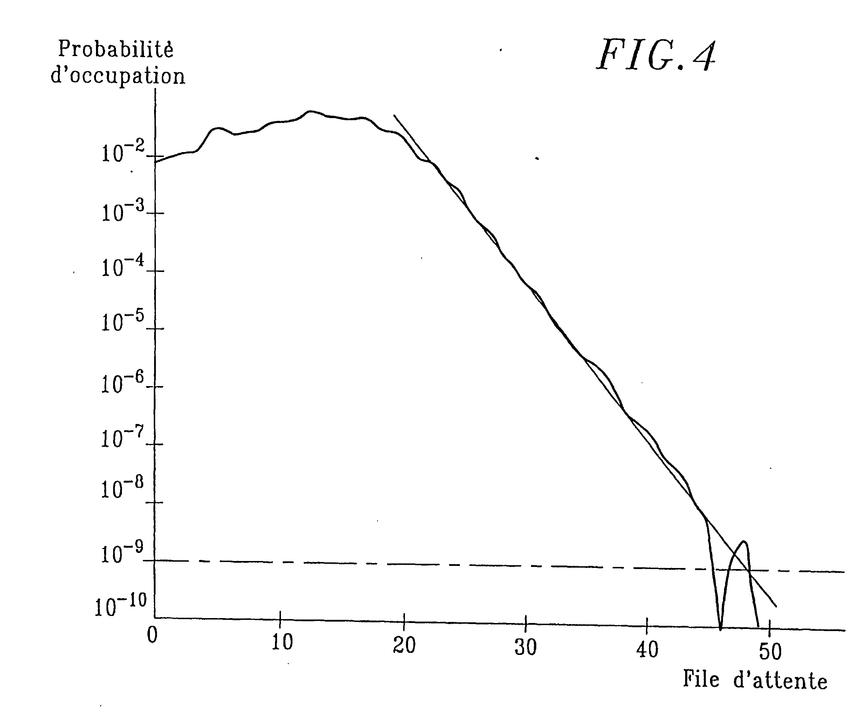

Les inventeurs ont procédé à une simulation des arrivées successives de paquets sur $10^7$ "temps paquet". Pour chaque entrée, un premier tirage aléatoire détermine la présence ou l'absence d'un paquet de façon à ce qu'en moyenne un paquet soit présent 8 fois sur 10. Si un paquet est présent à l'entrée considérée, un second tirage aléatoire détermine la sortie qu'il souhaite avec une répartition équi-probable entre toutes les sorties. Tous ces tirages ne sont pas corrélés, entre eux et entre les différents "temps paquet". Un processus Markovien est simulé : l'état du commutateur à un temps donné ne dépend que de son état au temps précédent à travers une matrice de transition. En régime stationnaire, le comportement du commutateur est déterminé par la plus petite des valeurs propres de la matrice de transition. On a reporté sur la figure 4 la probabilité de présence de paquets en attente dans le commutateur en fonction du délai d'attente. Chaque entrée dispose de 16 accès sur les lignes à retard 14. Les longueurs successives des lignes à retard sont incrémentées en moyenne de 3 "temps paquet" de sorte que la longueur moyenne maximale est de 48 "temps paquet".

Le comportement exponentiel de la probabilité d'occupation apparaît clairement sur la figure 4. En échelle logarithmique, la droite caractéristique de ce comportement atteint une probabilité de $10^{-9}$ pour un délai de 48 "temps paquet" indiquant que les critères retenus d'un taux de perte de paquet inférieur à $10^{-9}$ sous trafic uniforme et charge 0,8 par entrée, sont remplis.

SECOND EXEMPLE DE REALISATION POUR UN COMMUTATEUR 64X64

Le paramètre m est déterminé par la taille de la mémoire d'un commutateur à mémoire partagée. Cette mémoire contient les P files d'attente associées aux P sorties. La longueur de chacune de ces files correspond à un nombre aléatoire caractérisé par sa variance. Comme la variance de la somme de ces files d'attente détermine la taille de la mémoire et qu'elle croît sous-linéairement avec le nombre de files d'attente du fait du multiplexage statistique, le paramètre m décroît avec la taille du commutateur.

Pour N=P=64 et X=1, m vaut 5 et le paramètre r doit être supérieur ou égal à 9.

Si l'on reprenait l'architecture conforme à la figure 1 adoptée pour le commutateur 16x16, les modules de transposition 12 du premier étage 10 opéreraient sur 9 longueurs d'ondes, tandis que les commutateurs du second étage 20 chargés d'acheminer les paquets vers les sorties désirées S opéreraient avec 64 longueurs d'ondes.

Pour équilibrer les deux étages 10 et 20 et diminuer le nombre de longueurs d'ondes nécessaire, le commutateur peut alors être organisé conformément à la figure 2, en disposant les modules d'aiguillage 22 du second étage 20 sous forme d'ensembles associés respectivement à certaines choisies des sorties S.

Ainsi, par exemple, on peut répartir les modules d'aiguillage 22 du second étage 20 en deux ensembles reliés respectivement les uns aux sorties S paires et les autres aux sorties S impaires ou encore les uns à la première moitié de sortie S et les autres à la seconde moitié de sortie S.

Plus précisément selon ce mode de réalisation particulier et non limitatif de la présente invention, le premier étage 10 comprend N=64 modules de transposition de longueur d'onde 100, chacun apte à transposer la longueur d'onde d'un paquet optique reçu sur l'une des N=64 entrées E sur une longueur d'onde choisie parmi r=32 longueurs d'ondes potentielles, N=64 groupes de r=32 lignes à retard 14 associés respectivement à chaque module de transposition 100 et N=64 moyens passifs d'aiguillage 110 sensibles à la longueur d'onde, placés respectivement en sortie de chaque module de transposition 100 pour diriger chaque paquet issu de ce module vers l'une des r=32 lignes à retard 14 associées, en fonction de sa longueur d'onde transposée, le second étage 20 comprend r=32 blocs de Y=2 modules de transposition 200 de longueur d'onde couplés chacun en entrée par un multiplexeur 220 à la sortie de r=32 lignes à retard 14 provenant respectivement de 32 entrées, chacun des r.Y=N=64 modules de transposition 200 du second étage 20 étant adapté pour transposer la longueur d'onde d'un paquet optique ainsi reçu en provenance d'une ligne à retard 14 sur une longueur d'onde choisie parmi P/X=32 longueurs d'ondes potentielles, r.Y=64 groupes de P/X=32 lignes optiques 24 associés respectivement en entrée à chaque module de transposition 200 du deuxième étage 20 et en sortie à P/X=32 sorties S du commutateur, respectivement paires ou impaires, et r.Y=64 moyens passifs d'aiguillage 210 sensibles à la longueur d'onde placés respectivement en sortie de chaque module de transposition 200 du deuxième étage 20, pour diriger chaque paquet issu de ce module vers l'une des P/X=32 lignes optiques associées 24, en fonction de sa longueur d'onde transposée et le troisième étage 30 comprend P=64 coupleurs ou multiplexeurs passifs 32 à N/X=32 entrées et une sortie

Au premier étage de transposition 10, chaque entrée est aiguillée vers un ensemble donné de modules 22 du second étage 20, par les moyens de contrôle 40, en fonction de la sortie souhaitée paire ou impaire et est dirigée pour chacune de ces deux éventualités vers l'une des r/X=16 lignes à retard 14 possibles.

Au deuxième étage de transposition 20, le paquet peut accéder à l'une des 32 sorties paire ou impaire selon le choix fait au premier étage de transposition.

Le premier étage 10 a donc été doublé en capacité de fréquence, ce qui permet de diviser par deux le second étage 20 afin d'optimiser l'utilisation des longueurs d'ondes. Le principe de fonctionnement de ce commutateur reste identique à celui indiqué précédemment.

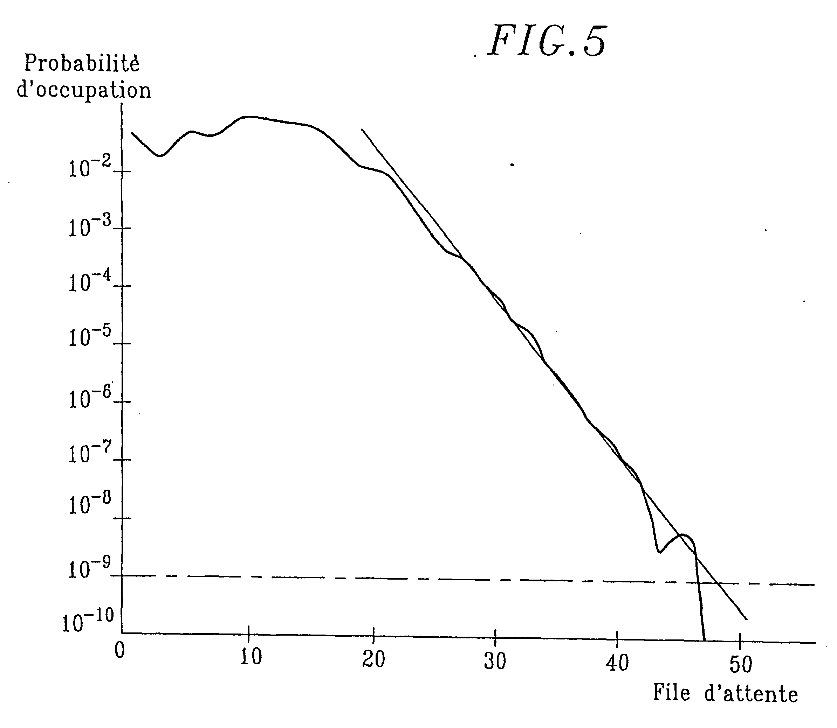

La figure 5 montre que la probabilité d'avoir un paquet en attente avec un retard supérieur à la taille maximale de lignes à retard (48 "temps paquet") est inférieure à $10^{-9}$.

Cette probabilité est là encore obtenue par extrapolation du comportement exponentiel de la probabilité d'avoir un paquet en attente avec un retard donné conformément au caractère Markovien du processus.

En conclusion, la présente invention propose une architecture de commutateur de paquets optiques résolvant les conflits d'adresse pour un taux de perte de paquet inférieur à $10^{-9}$ pour une probabilité moyenne de présence des paquets par port d'entrée inférieure à 0,8 et sous trafic uniforme.

Une mémoire à accès pseudo-aléatoire est définie sur la base de lignes à retard 14 en fibres optiques. Les accès mémoires sur la ligne à retard 14 pilotés dans le premier étage 10 et les accès aux ports de sortie S pilotés par le second étage 20, reposent sur des transpositions de longueurs d'ondes des paquets optiques.

Dans le commutateur, selon l'invention, seule l'en-tête détectée au niveau du premier étage 10 est traitée par conversion opto-électronique pour déterminer le port de sortie souhaité du paquet.

La charge d'information reste quant à elle sous forme optique et n'est jamais traitée sous quelle que forme que ce soit au niveau du bit d'information. Elle est donc acheminée directement par le réseau de connexion vers son port de sortie sur la base des informations contenues dans l'en-tête. De cette façon, la bande passante de la charge d'information n'est pas limitée par la technologie électronique, mais uniquement par celle des composants optiques.

Dans ce sens, le commutateur conforme à l'invention, est totalement transparent pour la charge d'information.

La charge d'information contenue dans tout paquet n'est ainsi traitée que par deux composants optiques actifs constitués par des étages de transposition de fréquence et des lignes à retard en fibres optiques. D'une part, le commutateur ne comporte donc que deux étages de traitement et son architecture est relativement simple. D'autre part, la dégradation du rapport signal à bruit inhérente à tout composant se réduit à celle apportée par les deux modules de transposition et les deux multiplexeurs précédant l'un le second étage, l'autre la sortie.

Les modules d'aiguillage 12 et 22 peuvent faire l'objet de nombreux modes de réalisation.

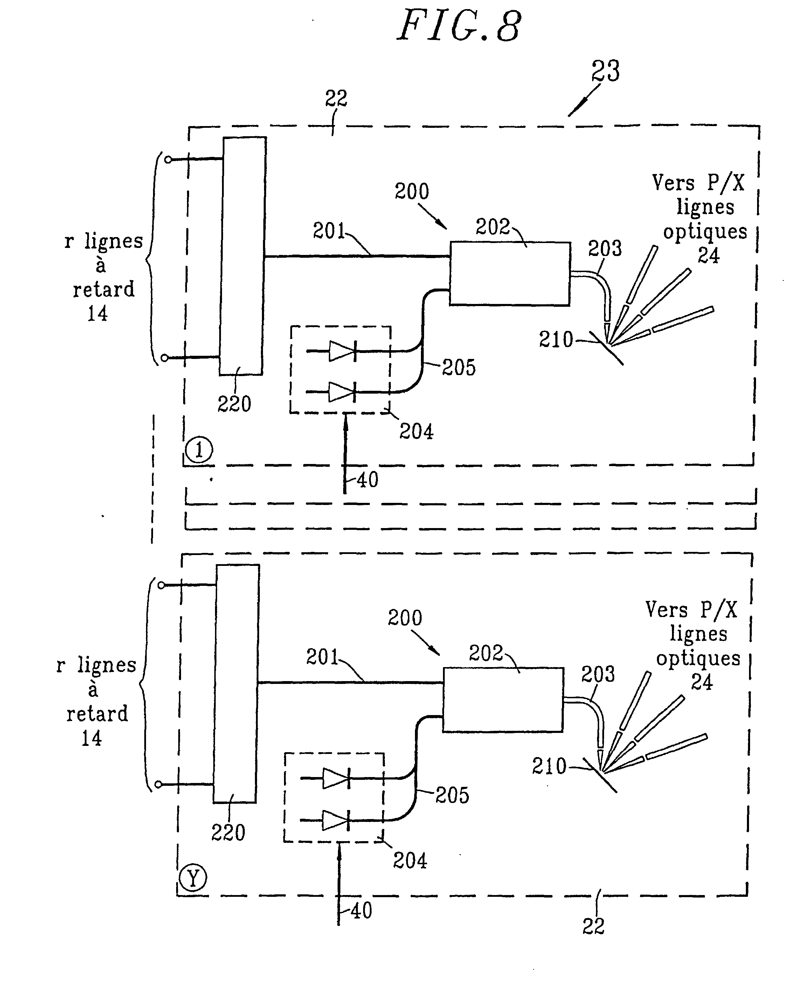

De préférence, ces moyens d'aiguillage 12, 22, du type représenté sur la figure 6 et respectivement sur les figures 7 et 8 annexées, sont conformes aux dispositions décrites et représentées dans la demande de brevet déposée en France le 10 Septembre 1993 sous le n° 93 10800, dont le contenu doit être considéré comme intégré à la présente description par la référence qui lui est faite ici.

Pour l'essentiel, ces moyens d'aiguillage comprennent essentiellement des moyens 100, 200 de conversion de longueur d'onde et des moyens passifs d'aiguillage 110, 210 précédés, pour le premier étage 10 au moins, de moyens séparateurs 120.

On va maintenant décrire la structure des moyens d'aiguillage 12 pour le premier étage 10, en regard de la figure 6.

Les moyens séparateurs 120 sont conçus pour séparer les signaux optiques reçus en entrée, en deux faisceaux : un faisceau contenant au moins l'adresse d'aiguillage d'une part, et un faisceau contenant au moins la charge utile d'autre part. En pratique, les deux faisceaux obtenus en sortie des moyens séparateurs 120 peuvent être identiques et comprendre chacun l'adresse d'aiguillage et la charge utile. La charge utile peut par exemple être utilisée sur la voie exploitant l'adresse d'aiguillage pour une synchronisation de phase de l'étiquette par rapport à la charge utile lors de la réécriture de cette étiquette.

Le cas échéant, ces moyens séparateurs 120 peuvent être conçus pour laisser passer le signal d'adresse avec ou sans modification de la charge utile.

Ces moyens séparateurs 120 peuvent être formés de tout moyen adéquat connu de l'homme de l'art. A titre d'exemple non limitatif, les moyens séparateurs 120 peuvent être formés d'un coupleur optique à fibres classique.

Ces moyens séparateurs 120 sont associés en outre à des moyens 122 aptes à détecter électroniquement l'information d'aiguillage et à traduire celle-ci sous forme d'adresse.

Ces moyens 122 de détection et de traitement de l'adresse peuvent par exemple se composer d'un détecteur optique classique PIN 123 suivi d'un amplificateur 124 et d'un circuit numérique 125 de décodage d'adresse et de commande des moyens de conversion de longueur d'onde 100.

Ce circuit numérique 125 de décodage et de commande doit être adapté en particulier au code d'adressage, au nombre de bits de l'adresse et au réseau de télécommunication.

Les moyens 122 peuvent être intégrés respectivement dans chaque module 12, en étant reliés au circuit de contrôle 40, ou être intégrés dans ce circuit de contrôle 40.

Le circuit de contrôle 40 pilote les moyens de conversion de longueur d'onde 100 en fonction de l'aiguillage requis.

Ces moyens de conversion de longueur d'onde 100 peuvent également être formés de tout moyen adéquat connu de l'homme de l'art.

De préférence, dans le cadre de la présente invention, ces moyens de conversion 100 sont formés par la combinaison d'un amplificateur optique à semiconducteur 102 et d'un ensemble de r lasers 104 piloté par les moyens de contrôle 40. Le nombre de r lasers 104 utilisé est égal au nombre r de longueurs d'ondes requises.

Pour le module du premier étage 10, la charge utile est appliquée à l'entrée de l'amplificateur optique 102 par l'intermédiaire d'une fibre optique 101 placée entre la sortie des moyens séparateurs 120 et ladite entrée de l'amplificateur 102. Par ailleurs, les sorties des lasers 104 sont reliées par l'intermédiaire de fibres respectives 105 sur une entrée auxiliaire du même amplificateur optique 102, ou couplées à la fibre optique 101 avant l'entrée de cet amplificateur optique 102. L'amplificateur optique 102 a pour fonction de transposer sur la longueur d'onde de sortie du laser 104 activé, les informations provenant de la fibre optique 101.

Ainsi, suivant le contenu de l'adresse identifiée en sortie des moyens 122, laquelle adresse détermine le cheminement du message, les moyens de contrôle 40 provoquent l'alimentation de l'un des r lasers 104 de longueur d'onde définie sur laquelle sera transféré le message utile et qui servira à aiguiller le message utile vers la sortie associée.

La longueur d'onde du signal issu des moyens de conversion 102 correspond par conséquent à la longueur d'onde du laser 104 activé et varie par conséquent selon le contenu de l'adresse détectée par les moyens 122.

L'amplificateur optique 102 peut être formé de toute structure connue de l'homme de l'art, telle que par exemple décrite dans le document Electronics Letters, 27 Août 1992, vol. 28, n° 12, page 1714.

La sortie 103 de l'amplificateur optique 102 est dirigée vers les moyens passifs d'aiguillage 110. Ceux-ci sont formés de préférence d'un réseau de diffraction. Ce réseau de diffraction 110 travaillant en démultiplexeur dirige par conséquent le signal optique vers l'une ou l'autre des r différentes voies de sortie possible, selon la valeur de la longueur d'onde du signal qu'il reçoit en entrée.

Comme on le voit, sur la figure 6, la fibre optique 101 qui dirige le message utile de la sortie des moyens séparateurs 120 vers l'amplificateur optique 102 peut comprendre un élément retard, formé par exemple de différentes spires, pour tenir compte du temps de traitement électronique du signal d'adresse dans les moyens 122. Sur la figure 6, ces spires définissant un retard dans le message utile sont référencées 104.

Le réseau de diffraction 110 intégré aux modules 12 de chaque premier étage 10 dirige ainsi les paquets optiques vers l'une choisie des r lignes à retard 14 disponibles.

On va maintenant décrire un mode de réalisation des moyens d'aiguillage 22 du second étage 20, en regard de la figure 7. Les moyens d'aiguillage 22 de la figure 7 sont de préférence destinés à un commutateur du type représenté sur la figure 1 (soit X=1).

On retrouve sur la figure 7 des moyens de conversion de longueur d'onde 200 et des moyens passifs d'aiguillage 210 conformes à ceux précédemment décrits en regard de la figure 6. Plus précisément, selon la figure 7, au niveau du second étage 20, il est prévu dans chaque module 22, un moyen de conversion de longueur d'onde 200 formé d'un amplificateur optique 202 couplé en entrée par une fibre 201 et par l'intermédiaire d'un multiplexeur 220 à N=r entrées et une sortie, aux sorties des N=r lignes à retard 14 associées et piloté par un groupe de P lasers 204 eux mêmes contrôlés par les moyens 40 en fonction du routage requis. En outre, chaque module de conversion 202 du second étage 20 est couplé par l'intermédiaire d'une ligne optique 203 à un réseau de diffraction 210.

Le fonctionnement de ces moyens 202, 204 et 210 est identique à celui des moyens similaires 102, 104 et 110.

Par conséquent, ce réseau de diffraction 210 de chaque module 22 du deuxième étage 20 est adapté pour diriger les paquets sélectivement vers l'une des P lignes optiques 24 associées correspondant à la sortie choisie.

On a représenté sur la figure 8 une variante de réalisation des moyens d'aiguillage 22 du second étage 20 destinée à un commutateur du type représenté sur la figure 2.

On retrouve sur la figure 8 des moyens de conversion de longueur d'onde 200 et des moyens passifs d'aiguillage 210 conformes à ceux précédemment décrits en regard des figures 6 et 7. Plus précisément, selon la figure 8, au niveau du second étage 20, il est prévu dans chaque bloc 23, Y modules 22 comprenant chacun un moyen de conversion de longueur d'onde 200 formé d'un amplificateur optique 202 couplé en entrée par une fibre 201 et par l'intermédiaire d'un multiplexeur 220 à r entrées et une sortie, aux sorties de r lignes à retard 14 associées et piloté par un groupe de P/X lasers 204 eux mêmes contrôlés par les moyens 40 en fonction du routage requis. En outre, chaque module de conversion 202 du second étage 20 est couplé par l'intermédiaire d'une ligne optique 203 à un réseau de diffraction 210.

Le fonctionnement de ces moyens 202, 204 et 210 est identique à celui des moyens similaires 102, 104 et 110.

Par conséquent, ce réseau de diffraction 210 de chaque module 22 du deuxième étage 20 est adapté pour diriger les paquets sélectivement vers l'une des P/X lignes optiques 24 associées correspondant à la sortie choisie.

Bien entendu la présente invention n'est pas limitée aux modes de réalisation particuliers qui viennent d'être décrits mais s'étend à toute variante conforme à son esprit.

**Revendications**

**1.** Commutateur optique entre N entrées et P sorties, de signaux optiques organisés en paquets comprenant chacun une en-tête contenant des informations relatives au routage de chaque paquet et une charge d'information, lequel commutateur comprend :

- des moyens (12, 40, 122) de lecture de l'en-tête de chaque paquet optique et d'identification du routage correspondant,
- des moyens (12, 22, 32) d'orientation et de couplage aptes à diriger chaque paquet arrivant sur une entrée (E) quelconque vers la sortie (S) correspondant au routage déterminé par l'en-tête du paquet, et
- des lignes à retard (14) par lesquelles transitent sélectivement les signaux optiques afin de gérer les conflits de routage occasionnés lorsque plusieurs paquets souhaitent accéder simultanément à la même sortie (S), **caractérisé par le fait qu'**il comprend trois étages,

dans lequel le commutateur comporte:

- un premier étage (10), temporel, adapté pour diriger chaque paquet optique reçu en entrée (E) vers une ligne à retard choisie (14), pour attribuer à chaque paquet un retard permettant de réorganiser temporellement les paquets afin d'éviter les conflits de routage, et
- un second étage (20), spatial, couplé en sortie des lignes à retard (14) provenant du premier étage (10) et adapté pour diriger sélectivement les paquets optiques vers la sortie (S) correspondant au routage déterminé par l'en-tête de chaque paquet,

**caracterisé par le fait que**

. le premier étage (10) comprend. N groupes de X ensembles de r/X en moyenne lignes à retard (14) et N modules d'aiguillage (12) aptes à diriger chaque paquet optique reçu vers une ligne à retard (14) choisie parmi l'une des r/X en moyenne lignes à retard de X ensembles,
. le commutateur comprend en outre un troisième étage (30), de sortie.

2. Commutateur selon la revendication 1, **caractérisé par le fait que** le troisième étage (30) est passif.

3. Commutateur selon la revendication 1, **caractérisé par le fait que** le troisième étage (30) est adapté pour définir l'ordre temporel des paquets accédant sur une même sortie (S), après le second étage (20).

4. Commutateur selon l'une des revendications 1 à 3, **caractérisé par le fait qu'**il est organisé en mémoire à accès pseudo-aléatoire.

5. Commutateur selon l'une des revendications 1 à 4, **caractérisé par le fait que** le premier étage (10) comprend N groupes de r lignes à retard (14) et N modules (12) d'aiguillage aptes à diriger chaque paquet optique reçu vers une ligne à retard (14) choisie parmi r lignes à retard disponibles.

6. Commutateur selon l'une des revendications 1 à 5, **caractérisé par le fait que** l'étage d'entrée (10) comprend N modules de transposition de fréquence (12), N groupes de r lignes à retard (14) et N moyens (110) passifs d'aiguillage sensibles à la longueur d'onde.

7. Commutateur selon l'une des revendications 1 à 6, **caractérisé par le fait que** le premier étage (10) comprend N modules de transposition de longueur d'onde (12, 102) chacun apte à transposer la longueur d'onde d'un paquet optique reçu sur l'une des N entrées (E) sur une longueur d'onde choisie parmi r longueurs d'ondes potentielles, N groupes de X ensembles de r/X en moyenne lignes à retard (14) associés respectivement à chaque module de transposition et N moyens passifs d'aiguillage (110) sensibles à la longueur d'onde, placés respectivement en sortie de chaque module de transposition pour diriger chaque paquet issu de ce module vers l'une des r lignes à retard associées (14) en fonction de sa longueur d'onde transposée.

8. Commutateur selon l'une des revendications 1 à 7, **caractérisé par le fait que** le premier étage (10) comprend N modules de transposition de longueur d'onde (12, 102) chacun apte à transposer la longueur d'onde d'un paquet optique reçu sur l'une des N entrées (E) sur une longueur d'onde choisie parmi r longueurs d'ondes potentielles, N groupes de r lignes à retard (14) associés respectivement à chaque module de transposition et N moyens passifs d'aiguillage (110) sensibles à la longueur d'onde, placés respectivement en sortie de chaque module de transposition pour diriger chaque paquet issu de ce module vers l'une des r lignes à retard associées (14) en fonction de sa longueur d'onde transposée.

9. Commutateur selon la revendication 7, **caractérisé par le fait que** dans chacun des N groupes, les r lignes à retard (14) sont organisées en X ensembles de r/X en moyenne lignes définissant des retards différents d'une ligne à l'autre dans chaque groupe de r lignes à retard (14).

10. Commutateur selon la revendication 8, **caractérisé par le fait que** dans chacun des N groupes, les r lignes à retard (14) définissent des retards différents d'une ligne à l'autre.

11. Commutateur selon l'une des revendications 1 à 10, **caractérisé par le fait que** le second étage (20) comprend r blocs comportant chacun Y=N/r modules d'aiguillage (22).

12. Commutateur selon l'une des revendications 1 à 11, **caractérisé par le fait que** le second étage (20) comprend N modules d'aiguillage (22).

13. Commutateur selon l'une des revendications 1 à 12, **caractérisé par le fait que** le second étage (20) comprend r.Y=N modules de transposition de longueur d'onde (202), r.Y groupes de P/X lignes optiques (24) et r.Y=N moyens passifs d'aiguillage (210).

**14.** Commutateur selon l'une des revendications 1 à 13, **caractérisé par le fait que** le second étage (20) comprend N modules de transposition de longueur d'onde (202), N groupes de P lignes optiques (24) et N moyens passifs d'aiguillage (210).

**15.** Commutateur selon l'une des revendications 1 à 14, **caractérisé par le fait que** le second étage (20) comprend r blocs de Y modules de transposition de longueur d'onde (202) couplés chacun en entrée, grâce à un multiplexeur, à la sortie de r lignes à retard (14) provenant de r entrées, chacun des modules de transposition étant adapté pour transposer la longueur d'onde d'un paquet optique ainsi reçu en provenance d'une ligne à retard sur une longueur d'onde choisie parmi P/X longueur d'onde potentielle, $r.Y=N$ groupes de P/X lignes optiques (24) associées respectivement en entrée à chaque module de transposition du deuxième étage (20) et en sortie à P/X sorties du commutateur et r.Y moyens passifs d'aiguillage (210) sensibles à la longueur d'onde, placés respectivement en sortie de chaque module de transposition du deuxième étage (20), pour diriger chaque paquet issu de ce module vers l'une des P/X lignes optiques associées (24), en fonction de sa longueur d'onde transposée.

**16.** Commutateur selon l'une des revendications 1 à 15, **caractérisé par le fait que** le second étage (20) comprend N modules de transposition de longueur d'onde (202) couplés chacun en entrée à la sortie de N lignes à retard (14) provenant respectivement de N entrées, chacun des modules de transposition étant adapté pour transposer la longueur d'onde d'un paquet optique ainsi reçu en provenance d'une ligne à retard (14) sur une longueur d'onde choisie parmi P longueurs d'onde potentielles, N groupes de P lignes optiques (24) associées respectivement en entrée à chaque module de transposition du deuxième étage (20) et en sortie à l'une des P sorties (S) du commutateur et N moyens passifs d'aiguillage (210) sensibles à la longueur d'onde, et placés respectivement en sortie de chaque module de transposition du deuxième étage, pour diriger chaque paquet issu de ce module vers l'une des P lignes optiques associées (24), en fonction de sa longueur d'onde transposée.

**17.** Commutateur selon l'une des revendications 1 à 16, **caractérisé par le fait que** les lignes à retard (14) provenant du premier étage (10) et couplées à un même module (22) du deuxième étage (20) définissent des retards tous différents entre eux.

**18.** Commutateur selon la revendication 17, **caractérisé par le fait que** les lignes à retard (14) provenant des entrées (E) sont affectées successivement à chaque module (22) du second étage (20) par permutation circulaire.

**19.** Commutateur selon l'une des revendications 17 ou 18, **caractérisé par le fait qu'**à toute entrée Ek est attribuée la ligne à retard (14) la plus courte précédant le module k du deuxième étage (20), puis la seconde ligne à retard (14) en terme de longueur du module k+Y du deuxième étage et ainsi de suite en procédant par saut de Y modules et par permutation circulaire sur l'ensemble des N modules 22 pour chaque incrément sur la longueur de la ligne à retard.

**20.** Commutateur selon l'une des revendications 17 ou 18, **caractérisé par le fait que** le premier module de transposition ($22_1$) du second étage est précédé de la ligne à retard ($14_1 1$) la plus courte de la première entrée jusqu'à la ligne à retard la plus longue ($14_n 1$) de la dernière entrée (N), le second module de transposition ($22_2$) du second étage (20) reçoit la ligne à retard ($14_1 2$) la plus longue de la première entrée, la ligne à retard la plus courte ($14_2 2$) de la seconde entrée jusqu'à l'avant dernière ligne à retard en terme de longueur de la dernière entrée (N), et ainsi de suite jusqu'au dernier module de transposition ($22_r$) du deuxième étage (20).

**21.** Commutateur selon l'une des revendications 1 à 20, **caractérisé par le fait que** le troisième étage (30) comprend P coupleurs ou multiplexeurs passifs (32) à N/X entrées et une sortie.

**22.** Commutateur selon l'une des revendications 1 à 21, **caractérisé par le fait que** le premier étage (10) comprend N modules (102) de transposition de longueur d'onde, chacun apte à transposer la longueur d'onde d'un paquet optique reçu sur l'une des N entrées (E) sur une longueur d'onde choisie parmi r longueurs d'ondes potentielles, N groupes de X ensembles de r/X en moyenne lignes à retard (14) associés respectivement à chaque module de transposition (12) et N moyens passifs d'aiguillage (110) sensibles à la longueur d'onde, placés respectivement en sortie de chaque module de transposition pour diriger chaque paquet issu de ce module vers l'une des r lignes à retard (14) associées, en fonction de sa longueur d'onde transposée, le second étage (20) comprend r blocs de Y modules (202) de transposition (22) de longueur d'onde couplés chacun en entrée à la sortie de r lignes à retard (14) provenant respectivement de r entrées, chacun des r.Y modules (202) de transposition du second étage étant adapté pour transposer la longueur d'onde d'un paquet optique ainsi reçu en provenance d'une ligne à retard (14) sur une longueur d'onde choisie parmi P/X longueurs d'ondes potentielles, r.Y groupes de P/X lignes optiques (24) associées respectivement en entrée à chaque module de transposition du deuxième étage et en sortie à P/X sorties du commutateur et r.Y moyens passifs d'aiguillage (210) sensibles à la longueur d'onde placés respectivement en sortie de chaque module de transposition (202) du deuxième étage (20), pour diriger chaque paquet issu de ce module vers l'une des P/X lignes optiques associées (24), en fonction de sa longueur d'onde transposée et le troisième étage (30) comprend P coupleurs ou multiplexeurs passifs (32) à P/X entrées et une sortie.

23. Commutateur selon la revendication 22, **caractérisé par le fait que** chaque entrée (E) possède un et un seul accès sur tout bloc (23) du second étage.

24. Commutateur selon l'une des revendication 1 à 23 **caractérisé par le fait que** chaque module d'entrée (12) a le choix parmi X ensembles de sorties, c'est à dire X ensembles de lignes à retard (14), lesquels X ensembles de sorties ou lignes à retard peuvent conduire respectivement par l'intermédiaire des modules (22) du second étage, de ligne (24) et des modules de sortie (32), respectivement à X groupes différents de P/X sorties S.

25. Commutateur selon l'une des revendications 1 à 24, **caractérisé par le fait que** les N/X premiers modules (22) du second étage (20) sont attribués à un premier type de sorties (S), les N/X modules suivants (22) du second étage (20) sont attribués à un second type de sorties (S) et ainsi de suite pour X types de sorties.

26. Commutateur selon l'une des revendications 1 à 25, **caractérisé par le fait que** les lignes à retard (14) sont formées de fibres optiques.

27. Commutateur selon l'une des revendications 1 à 26, **caractérisé par le fait que** chaque ligne à retard (14) correspond à un nombre entier de temps paquet.

28. Commutateur selon l'une des revendications 1 à 27, **caractérisé par le fait que** pour un commutateur comprenant un nombre d'entrées/sorties respectivement égal à 16, 32 et 64, la taille de certaines lignes à retard utilisées (14) est au minimum égale respectivement à 41, 43 et 44 temps paquet.

29. Commutateur selon l'une des revendications 1 à 28, **caractérisé par le fait que** chaque module de conversion de longueur d'onde (100, 200) est formé par la combinaison d'un amplificateur optique (102, 202) et d'un ensemble de lasers (104, 204) pilotés en fonction du routage souhaité.

30. Commutateur selon l'une des revendications 1 à 29, **caractérisé par le fait que** les moyens passifs d'aiguillage (110, 210) sont formés d'un réseau de diffraction.

31. Commutateur selon l'une des revendications 1 à 30, **caractérisé par le fait que** le nombre r de blocs de Y modules (22) du second étage (20) est supérieur ou égal à 2.mX-1, m représentant la profondeur temporelle moyenne par entrée en temps paquet sur laquelle ce commutateur doit résoudre des conflits de routage.

32. Commutateur selon l'une des revendications 1 à 31, **caractérisé par le fait que** les en-têtes des paquets sont effacées dans le premier étage (10) et réécrites dans le second étage (20).

33. Commutateur selon la revendication 13, 15 ou 22, **caractérisé par le fait que** X est égal à 2 et chaque module (22) du deuxième étage (20) est relié respectivement à une sortie paire ou à une sortie impaire du commutateur.

34. Commutateur selon la revendication 13, 15 ou 22, **caractérisé par le fait que** X est égal à 1 et chaque module (22) du deuxième étage (20) est relié à chaque sortie du commutateur.

35. Commutateur selon l'une des revendications 1 à 34, **caractérisé par le fait que** l'étage d'entrée (10) est également spatial et les modules (12) de l'étage d'entrée (10) sont reliés à certains seulement des modules (22) du deuxième étage(20).

36. Commutateur selon l'une des revendications 1 à 35, **caractérisé par le fait que** le second étage (20) comprend r blocs de Y=N/r ensembles (22) qui comportent chacun un module (200) de transposition de longueur d'onde formé par exemple d'un amplificateur optique (202) unique couplé par une fibre (201) aux sorties des r lignes à retard (14) associées provenant du premier étage (10) par l'intermédiaire d'un coupleur ou multiplexeur respectif (220) à r entrées et une sortie.

**37.** Commutateur selon l'une des revendications 1 à 36, **caractérisé par le fait que** P=N.

**38.** Commutateur selon l'une des revendications 1 à 36, **caractérisé par le fait que** P>N.

**39.** Commutateur selon l'une des revendications 1 à 40, **caractérisé par le fait que** r=N/X.

**40.** Commutateur selon l'une des revendications 1 à 39, **caractérisé par le fait que** chaque module i du second étage (20) adresse un type $x_i$ de sortie défini par

$$x_i = E\,((i-1).X/N)+1 \qquad (x_i=1,X).$$

**41.** Commutateur selon l'une des revendications 1 à 40, **caractérisé par le fait que** chaque module i du second étage (20) peut accéder à si sorties définies par

$$s_i = x_i + (q-1).X \qquad (q=1,P/X),$$

si l'on considère des types de sortie interdigités, par exemple deux types de sorties alternées respectivement paires et impaires ou

$$s_i = (x_i -1)\,(P/X) +q \qquad (q= 1,P/X),$$

si l'on considère que chaque type de sortie correspond à une suite continue de sorties, non interdigitées d'un type de sortie à l'autre.

**42.** Commutateur selon l'une des revendications 1 à 41, **caractérisé par le fait que** chaque module i du second étage (20) est précédé de r lignes à retard (14) associées aux entrées :

$$k = [i-p.Y-1]_N+1 \qquad (p=0,r-1).$$

**43.** Commutateur selon l'une des revendications 1 à 42, **caractérisé par le fait que** chaque entrée k du commutateur adresse des modules i du 2ème étage à travers des lignes à retard :

$$i = [\,k + p.Y -1\,]_N + 1 \qquad (p=0,r-1),$$

la longueur des lignes à retard croissant avec p et correspondant à un nombre entier de paquets compris entre 1 et L

**Claims**

**1.** Optical switch N inputs and P outputs for optical signals organized into packets each comprising a header containing information relating to the routing of each packet and a payload which switch comprises:

- means (12, 40, 122) for reading the header of each optical packet and for identifying the corresponding routing,
- orientation and coupling means (12, 22, 32) for directing each packet arriving at any input (E) to the output (S) corresponding to the routing determined by the header of the packet, and
- delay lines (14) through which the optical signals pass selectively in order to manage routing conflicts arising when a plurality of packets require access to the same output (S) simultaneously, **characterized in that** it comprises three stages:

- a temporal, first stage (10) adapted to direct each optical packet received at an input (E) to a chosen delay line (14), to assign to each packet a time-delay enabling time reorganization of the packets in order to avoid routing conflicts, and
- a spatial, second stage (20) coupled to the output side of the delay lines (14) of the first stage (10) and adapted to direct the optical packets selectively to the output (S) corresponding to the routing determined by the header of each packet,

**characterized in that**

- the first stage (10) comprises N groups of X sets of r/X on average delay lines (14) and N routing modules (12) adapted to direct each received optical packet to a delay line (14) chosen from one of the r/X on average delay lines of X sets,
- the switch furthermore comprises an output third stage (30).

2. Switch according to Claim 1, **characterized in that** the third stage (30) is passive.

3. Switch according to Claim 1, **characterized in that** the third stage (30) is adapted to define the time order of the packets accessing the same output (S) after the second stage (20).

4. Switch according to one of Claims 1 to 3, **characterized in that** it is organized into pseudorandom access memory.

5. Switch according to one of Claims 1 to 4, **characterized in that** the first stage (10) comprises N groups of r delay lines (14) and N routing modules (12) adapted to direct each received optical packet to a delay line (14) chosen from r available delay lines.

6. Switch according to one of Claims 1 to 5, **characterized in that** the input stage (10) comprises N frequency converter modules (12), N groups of r delay lines (14) and N wavelength-sensitive passive routing means (110).

7. Switch according to one of Claims 1 to 6, **characterized in that** the first stage (10) comprises N wavelength converter modules (12, 102) each adapted to transpose the wavelength of an optical packet received at one of the N inputs (E) to a wavelength chosen from r potential wavelengths, N groups of X sets of r/X on average delay lines (14) respectively associated with each converter module and N wavelength-sensitive passive routing means (110) placed respectively at the output of each converter module to direct each packet from this module to one of the r associated delay lines (14) according to its transposed wavelength.

8. Switch according to one of Claims 1 to 7, **characterized in that** the first stage (10) comprises N wavelength converter modules (12, 102) each adapted to transpose the wavelength of an optical packet received at one of the N inputs (E) to a wavelength chosen from r potential wavelengths, N groups of r delay lines (14) respectively associated with each converter module and N wavelength-sensitive passive routing means (110) placed respectively at the output of each converter module to direct each packet from this module to one of the r associated delay lines (14) according to its transposed wavelength.

9. Switch according to Claim 7, **characterized in that** in each of the N groups the r delay lines (14) are organized into X sets of r/X on average lines defining different time-delays from one line to another in each group of r delay lines (14).

10. Switch according to Claim 8, **characterized in that** in each of the N groups the r delay lines (14) define different time-delays from one line to another.

11. Switch according to one of Claims 1 to 10, **characterized in that** the second stage (20) comprises r blocks each including Y=N/r routing modules (22).

12. Switch according to one of Claims 1 to 11, **characterized in that** the second stage (20) comprises N routing modules (22).

13. Switch according to one of Claims 1 to 12, **characterized in that** the second stage (20) comprises r.Y=N wavelength converter modules (202), r.Y groups of P/X optical lines (24) and r.Y=N passive routing means (210).

14. Switch according to one of Claims 1 to 13, **characterized in that** the second stage (20) comprises N wavelength converter modules (202), N groups of P optical lines (24) and N passive routing means (210).

15. Switch according to one of Claims 1 to 14, **characterized in that** the second stage (20) comprises r blocks of Y wavelength converter modules (202) each coupled on the input side via a multiplexer to the output of r delay lines (14) from r inputs, each of the converter modules being adapted to transpose the wavelength of an optical packet thus received from a delay line to a wavelength chosen from P/X potential wavelengths, r.Y=N groups of P/X optical lines (24) respectively associated on the input side with each converter module of the second stage (20) and on the output side with P/X outputs of the switch and r.Y wavelength-sensitive passive routing means (210) placed respectively at the output of each converter module of the second stage (20) for directing each packet from this module to one of the P/X associated optical lines (24) according to its transposed wavelength.

16. Switch according to one of Claims 1 to 15, **characterized in that** the second stage (20) comprises N wavelength converter modules (202) each coupled on the input side to the output of N delay lines (14) from N respective inputs, each of the converter modules being adapted to transpose the wavelength of an optical packet thus received from a delay line (14) to a wavelength chosen from P potential wavelengths, N groups of P optical lines (24) respectively associated on the input side with each converter module of the second stage (20) and on the output side with one of the P outputs (S) of the switch and N wavelength-sensitive passive routing means (210) placed respectively at the output of each converter module of the second stage for directing each packet from this module to one of the P associated optical lines (24) according to its transposed wavelength.

17. Switch according to one of Claims 1 to 16, **characterized in that** the delay lines (14) from the first stage (10) and coupled to a common module (22) of the second stage (20) define time-delays that are all different from each other.

18. Switch according to Claim 17, **characterized in that** the delay lines (14) from the inputs (E) are successively assigned to each module (22) of the second stage (20) by circular permutation.

19. Switch according to either of Claims 17 and 18, **characterized in that** each input Ek is assigned the shortest delay line (14) preceding the module k of the second stage (20), then the second shortest delay line (14) of the module k+Y of the second stage, and so on in increments of Y modules and by circular permutation through all of the N modules (22) for each delay line length increment.

20. Switch according to either of Claims 17 and 18, **characterized in that** the first converter module ($22_1$) of the second stage is preceded by the shortest delay line ($14_1 1$) of the fist input to the longest delay line ($14_n 1$) of the last input (N), the second converter module ($22_2$) of the second stage (20) receives the longest delay line ($14_1 2$) of the first input, the shortest delay line ($14_2 2$) of the second input up to the second shortest delay line of the last input (N), and so on up to the last converter module ($22_r$) of the second stage (20).

21. Switch according to one of Claims 1 to 20, **characterized in that** the third stage (30) comprises P passive multiplexers or couplers (32) having N/X inputs and one output.

22. Switch according to one of Claims 1 to 21, **characterized in that** the first stage (10) comprises N wavelength converter modules (102) each adapted to transpose the wavelength of an optical. packet received at one of the N inputs (E) to a wavelength chosen from r potential wavelengths, N groups of X sets of r/X on average delay lines (14) respectively associated with each converter module (12) and N wavelength-sensitive passive routing means (110) placed respectively at the output of each converter module to direct each packet from this module to one of the r associated delay lines (14) according to its transposed wavelength, the second stage (20) comprises r blocks of Y modules (202) for wavelength conversion (22) each coupled on the input side to the output of r delay lines (14) from r respective inputs, each of the r.Y converter modules (202) of the second stage being adapted to transpose. the wavelength of an optical packet thus received from a delay line (14) to a wavelength chosen from P/X potential wavelengths, r.Y groups of P/X optical lines respectively associated on the input side with each converter module of the second stage and on the output side with P/X outputs of the switch and r.Y wavelength-sensitive passive routing means (210) placed respectively at the output of each converter module (202) of the second stage (20) for directing each packet from this module to one of the P/X associated optical lines (24) according to its transposed wavelength and the third stage (30) comprises P passive multiplexers or couplers (32) with P/X inputs and one output.

23. Switch according to Claim 22, **characterized in that** each input (E) has only one port to any block (23) of the second stage.

24. Switch according to one of Claims 1 to 23, **characterized in that** each input module (12) has a choice of X sets of outputs, i.e. X sets of delay lines (14), which X sets of outputs or delay lines can respectively lead, via modules (22) of the second stage, lines (24) and output modules (32), to X respective different groups of P/X outputs (S).

**25.** Switch according to one of Claims 1 to 24, **characterized in that** the first N/X modules of the second stage (20) are assigned to a first type of output (S), the next N/X modules (22) of the second stage (20) are assigned to a second type of output (S) and so on for X types of output.

**26.** Switch according to one of Claims 1 to 25, **characterized in that** the delay lines (14) are in the form of optical fibres.

**27.** Switch according to one of Claims 1 to 26, **characterized in that** each delay line (14) corresponds to an integer number of packet times.

**28.** Switch according to one of Claims 1 to 27, **characterized in that** for a switch comprising a number of inputs/outputs respectively equal to 16, 32 and 64, the size of some of the delay lines (14) used is at least equal to 41, 43 and 44 packet times, respectively.

**29.** Switch according to one of Claims 1 to 28, **characterized in that** each wavelength converter module (100, 200) is formed by the combination of an optical amplifier (102, 202) and a set of lasers (104, 204) controlled in accordance with the required routing.

**30.** Switch according to one of Claims 1 to 29, **characterized in that** the passive routing means (110, 210) are formed by a diffraction grating.

**31.** Switch according to one of Claims 1 to 30, **characterized in that** the number r of blocks of Y modules (22) of the second stage (20) is greater than or equal to 2.mX-1 where m represents the average time depth in packet times per input to which this switch must resolve routing conflicts.

**32.** Switch according to one of Claims 1 to 31, **characterized in that** the packet headers are deleted in the first stage (10) and rewritten in the second stage (20).

**33.** Switch according to Claim 13, 15 or 22, **characterized in that** X is equal to 2 and each module (22) of the second stage (20) is respectively connected to an even output or to an odd output of the switch.

**34.** Switch according to Claim 13, 15 or 22, **characterized in that** X is equal to 1 and each module (22) of the second stage (20) is connected to each output of the switch.

**35.** Switch according to one of Claims 1 to 34, **characterized in that** the input stage (10) is also a space-switching stage and the modules (12) of the input stage (10) are connected to only some modules (22) of the second stage (20).

**36.** Switch according to one of Claims 1 to 35, **characterized in that** the second stage (20) comprises r blocks of Y=N/r sets (22) which each include a wavelength converter module (200) formed, for example, by a single optical amplifier (202) coupled by a fibre (201) to the outputs of the r associated delay lines (14) from the first stage (10) via a respective coupler or multiplexer (220) having r inputs and one output.

**37.** Switch according to one of Claims 1 to 36, **characterized in that** P=N.

**38.** Switch according to one of Claims 1 to 36, **characterized in that** P>N.

**39.** Switch according to one of Claims 1 to 36, **characterized in that** r=N/X.

**40.** Switch according to one of Claims 1 to 39,
**characterized in that** each module i of the second stage (20) addresses a type of output $x_i$ defined by the equation:

$$x_i = E((i-1).X/N)+1 \qquad (x_i=1,X).$$

**41.** Switch according to one of Claims 1 to 40, **characterized in that** each module i of the second stage (20) can access $s_i$ outputs defined by the equation:

$$s_i = x_i + (q-1).X \qquad (q=1,P/X)$$

if there are interdigitated types of output, for example two alternating types of output that are respectively even and odd, or

$$s_i = (x_i - 1)(P/X) + q \qquad (q = 1,P/X)$$

if each type of output corresponds to a continuous series of outputs not interdigitated from one type of output to the other.

**42.** Switch according to one of Claims 1 to 41, **characterized in that** each module i of the second stage (20) is preceded by r delay lines (14) associated with the inputs:

$$k = [i - p.Y-1]_N + 1 \ (p=0,r-1).$$

**43.** Switch according to one of Claims 1 to 42, **characterized in that** each input k of the switch addresses modules i of the second stage via delay lines:

$$i = [k + p.Y-1]_N + 1 \ (p=0,r-1),$$

the length of the delay lines increasing with p and corresponding to an integer number of packets between 1 and L.

**Patentansprüche**

**1.** Optische Vermittlungseinrichtung zwischen N Eingängen und P Ausgängen für optische Signale, die in Paketen organisiert sind, von denen jedes einen Header, der Informationen bezüglich des Routings jedes Pakets enthält, und einen Informationsteil umfaßt, wobei die Vermittlungseinrichtung folgendes umfaßt:

- Mittel (12, 40, 122) zum Lesen des Headers jedes optischen Paketes und zur Identifizierung des entsprechenden Routings,
- Mittel (12, 22, 32) zur Ausrichtung und Kopplung, die geeignet sind, jedes an einem beliebigen Eingang (E) ankommende Paket an einen Ausgang (S) zu leiten, der dem durch den Header des Pakets bestimmten Routing entspricht, und
- Verzögerungsleitungen (14), welche die optischen Signale selektiv durchlaufen, um die Konflikte des Routings zu verwalten, die verursacht werden, wenn mehrere Pakete gleichzeitig zum selben Ausgang (S) gelangen wollen,

**dadurch gekennzeichnet, daß** sie drei Stufen umfaßt, in welchen die Vermittlungseinrichtung aufweist:

- eine erste, zeitliche Stufe (10), die angepaßt ist, jedes optische Paket, das am Eingang (E) empfangen wird, zu einer ausgewählte Verzögerungsleitung (14) zu leiten, um jedem Paket eine Verzögerung aufzugeben, die es erlaubt, die Pakete zeitlich umzuorganisieren, um Konflikte des Routings zu vermeiden, und
- eine zweite, räumliche Stufe (20), die an den von der ersten Stufe (10) kommenden Ausgang der Verzögerungsleitungen (14) gekoppelt ist und angepaßt ist, die optischen Pakete selektiv zu dem Ausgang (S) zu leiten, der dem durch den Header jedes Pakets bestimmten Routing entspricht,

**dadurch gekennzeichnet, daß**

- die erste Stufe (10) N Gruppen aus X Ensembles von im Mittel r/X Verzögerungsleitungen (14) und N Verzweigungsmodule (12) umfaßt, die geeignet sind, jedes empfangene optische Paket zu einer Verzögerungsleitung (14) zu leiten, die aus einer der im Mittel r/X Verzögerungsleitungen der X Ensembles ausgewählt wird,
- die Vermittlungseinrichtung außerdem eine dritte Ausgangsstufe (30) umfaßt.

**2.** Vermittlungseinrichtung nach Anspruch 1, **dadurch gekennzeichnet, daß** die dritte Stufe (30) passiv ist.

**3.** Vermittlungseinrichtung nach Anspruch 1, **dadurch gekennzeichnet, daß** die dritte Stufe (30) angepaßt ist, um die zeitliche Folge der Pakete, die nach der zweiten Stufe (20) an denselben Ausgang (S) gelangen, zu bestimmen.

**4.** Vermittlungseinrichtung nach einem der Ansprüche 1 bis 3, **dadurch gekennzeichnet, daß** sie als Speicher mit pseudostochastischem Zugriff organisiert ist.

**5.** Vermittlungseinrichtung nach einem der Ansprüche 1 bis 4, **dadurch gekennzeichnet, daß** die erste Stufe (10) N Gruppen von r Verzögerungsleitungen (14) und N Verzweigungsmodule (12) umfaßt, die geeignet sind, jedes empfangene optische Paket zu einer Verzögerungsleitung (14) zu leiten, die aus r zur Verfügung stehenden Verzögerungsleitungen ausgewählt wird.

**6.** Vermittlungseinrichtung nach einem der Ansprüche 1 bis 5, **dadurch gekennzeichnet, daß** die Eingangsstufe (10) N Frequenzverlagerungsmodule (12), N Gruppen von r Verzögerungsleitungen (14) und N für die Wellenlänge empfindliche passive Verzögerungsmittel (110) umfaßt.

**7.** Vermittlungseinrichtung nach einem der Ansprüche 1 bis 6, **dadurch gekennzeichnet, daß** die erste Stufe (10) umfaßt: N Wellenlängenverlagerungsmodule (12, 102), von denen jedes geeignet ist, die Wellenlänge eines an einem der N Eingänge (E) empfangenen optischen Paketes auf eine Wellenlänge zu verlagern, die aus r möglichen Wellenlängen ausgewählt wird, N Gruppen aus X Ensembles von im Mittel r/X Verzögerungsleitungen (14), wobei die Gruppen jeweils mit jedem Verlagerungsmodul verbunden sind, und N für die Wellenlänge empfindliche passive Verzweigungsmittel (110), die jeweils am Ausgang jedes Verlagerungsmoduls angeordnet sind, um jedes von diesem Modul ausgehende Paket in Abhängigkeit von seiner verlagerten Wellenlänge zu einer der verbundenen r Verzögerungsleitungen (14) zu leiten.

**8.** Vermittlungseinrichtung nach einem der Ansprüche 1 bis 7, **dadurch gekennzeichnet, daß** die erste Stufe (10) umfaßt: N Wellenlängenverlagerungsmodule (12, 102), von denen jedes geeignet ist, die Wellenlänge eines an einem der N Eingänge (E) empfangenen optischen Pakets auf eine Wellenlänge zu verlagern, die aus r möglichen Wellenlängen ausgewählt wird, N Gruppen von r Verzögerungsleitungen (14), wobei die Gruppen jeweils mit jedem Verlagerungsmodul verbunden sind, und N für die Wellenlänge empfindliche passive Verzweigungsmittel (110), die jeweils am Ausgang jedes Verlagerungsmoduls angeordnet sind, um jedes von diesem Modul ausgehende Paket in Abhängigkeit von seiner verlagerten Wellenlänge zu einer der verbundenen r Verzögerungsleitungen 14 zu leiten.

**9.** Vermittlungseinrichtung nach Anspruch 7, **dadurch gekennzeichnet, daß** in jeder der N Gruppen, die r Verzögerungsleitungen (14) in X Ensembles von im Mittel r/X Leitungen organisiert sind, die in jeder Gruppe der r Verzögerungsleitungen (14) von einer Leitung zur nächsten verschiedene Verzögerungen bestimmen.

**10.** Vermittlungseinrichtung nach Anspruch 8, **dadurch gekennzeichnet, daß** in jeder der N Gruppen die r Verzögerungsleitungen (14) von einer Leitung zur nächsten verschiedene Verzögerungen bestimmen.

**11.** Vermittlungseinrichtung nach einem der Ansprüche 1 bis 10, **dadurch gekennzeichnet, daß** die zweite Stufe (20) r Blöcke umfaßt, von denen jeder Y=N/r Verzweigungsmodule (22) umfaßt.

**12.** Vermittlungseinrichtung nach einem der Ansprüche 1 bis 11, **dadurch gekennzeichnet, daß** die zweite Stufe (20) N Verzweigungsmodule (22) umfaßt.

**13.** Vermittlungseinrichtung nach einem der Ansprüche 1 bis 12, **dadurch gekennzeichnet, daß** die zweite Stufe (20) umfaßt: r Y = N Wellenlängenverlagerungs-module (202), r · Y Gruppen von P/X optischen Leitungen (24) und r · Y = N passive Verzweigungsmittel (210).

**14.** Vermittlungseinrichtung nach einem der Ansprüche 1 bis 13, **dadurch gekennzeichnet, daß** die zweite Stufe (20) umfaßt: N Wellenlängenverlagerungsmodule (202), N Gruppen von P optischen Leitungen (24) und N passive Verzweigungsmittel (210).

**15.** Vermittlungseinrichtung nach einem der Ansprüche 1 bis 14, **dadurch gekennzeichnet, daß** die zweite Stufe (20) umfaßt: r Blöcke von Y Wellenlängenverlagerungsmodulen (202), von denen jedes am Eingang dank eines Multiplexers mit dem Ausgang von r Verzögerungsleitungen (14) gekoppelt ist, die von r Eingängen kommen, wobei jedes der Verlagerungsmodule angepaßt ist, um die Wellenlänge eines optischen Pakets, das so von einer Verzögerungsleitung kommend empfangen wird, auf eine Wellenlänge zu verlagern, die aus P/X möglichen Wellenlängen ausgewählt wird, r · Y = N Gruppen von P/X optischen Leitungen (24), die jeweils am Eingang mit jedem Verlagerungsmodul der zweiten Stufe (20) und am Ausgang mit P/X Ausgängen der Vermittlungseinrichtung verbunden sind, und r · Y für die Wellenlänge empfindliche passive Verzweigungsmittel (210), die jeweils am Ausgang jedes Verlagerungsmoduls der zweiten Stufe (20) angeordnet sind, um jedes von diesem Modul ausgehende Paket in Abhängigkeit seiner verlagerten Wellenlänge zu einer der P/X verbundenen optischen Leitungen (24) zu leiten.

16. Vermittlungseinrichtung nach einem der Ansprüche 1 bis 15, **dadurch gekennzeichnet, daß** die zweite Stufe (20) umfaßt: N Wellenlängenverlagerungsmodule (202), von denen jedes am Eingang mit einem Ausgang von N Verzögerungsleitungen (14), die jeweils von N Eingängen kommen, gekoppelt ist, wobei jedes der Verlagerungsmodule angepaßt ist, um die Wellenlänge eines optischen Pakets, das so von einer Verzögerungsleitung (14) kommend empfangen wird, auf eine Wellenlänge zu verlagern, die aus P möglichen Wellenlängen ausgewählt wird, N Gruppen von P optischen Leitungen (24), die jeweils am Eingang mit jedem Verlagerungsmodul der zweiten Stufe (20) und am Ausgang mit einem der P Ausgänge (S) der Vermittlungseinrichtung verbunden sind, und N für die Wellenlänge empfindliche passive Verzweigungsmittel (210), die jeweils am Ausgang jedes Verlagerungsmoduls der zweiten Stufe angeordnet sind, um jedes von diesem Modul ausgehende Paket in Abhängigkeit von seiner verlagerten Wellenlänge zu einer der P verbundenen optischen Leitungen (24) zu leiten.

17. Vermittlungseinrichtung nach einem der Ansprüche 1 bis 16, **dadurch gekennzeichnet, daß** die Verzögerungsleitungen (14), die von der ersten Stufe (10) kommen und mit einem gleichen Modul (22) der zweiten Stufe (20) gekoppelt sind, voneinander ganz unterschiedliche Verzögerungen bestimmen.

18. Vermittlungseinrichtung nach Anspruch 17, **dadurch gekennzeichnet, daß** die von den Eingängen (E) kommenden Verzögerungsleitungen (14) nacheinander jedem Modul (22) der zweiten Stufe (20) durch zyklische Permutation zugewiesen werden.

19. Vermittlungseinrichtung nach Anspruch 17 oder 18, **dadurch gekennzeichnet, daß** jedem Eingang Ek die kürzeste Verzögerungsleitung (14), die dem Modul k der zweiten Stufe (20) vorangeht, zugewiesen wird, dann die zweite Verzögerungsleitung (14) entsprechend der Länge des Moduls k + Y der zweiten Stufe und so weiter verfahrend durch Sprung um Y Module und durch zyklische Permutation in dem Ensemble der N Module (22) für jedes Inkrement der Länge der Verzögerungsleitung.

20. Vermittlungseinrichtung nach Anspruch 17 oder 18, **dadurch gekennzeichnet, daß** das erste Verlagerungsmodul ($22_1$) der zweiten Stufe von der kürzesten Verzögerungsleitung ($14_1$1) des ersten Eingangs bis zur längsten Verzögerungsleitung ($14_n$1) des letzten Eingang (N) vorangegangen wird, das zweite Verlagerungsmodul ($22_2$) der zweiten Stufe (20) die längste Verzögerungsleitung ($14_1$2) des ersten Eingangs, die kürzeste Verzögerungsleitung ($14_2$2) des zweiten Eingangs bis zur vorletzten Verzögerungsleitung entsprechend der Länge des letzten Eingangs (N) usw. empfängt, bis zum letzten Verlagerungsmodul ($22_r$) der zweiten Stufe (20).

21. Vermittlungseinrichtung nach einem der Ansprüche 1 bis 20, **dadurch gekennzeichnet, daß** die dritte Stufe (30) P passive Koppler oder Multiplexer (32) mit N/X Eingängen und einem Ausgang umfaßt.

22. Vermittlungseinrichtung nach einem der Ansprüche 1 bis 21, **dadurch gekennzeichnet, daß** die erste Stufe (10) umfaßt: N Wellenlängenverlagerungsmodule (102), von denen jedes geeignet ist, die Wellenlänge eines an einem der N Eingängen (E) empfangenen optischen Pakets auf eine Wellenlänge zu verlagern, die aus r möglichen Wellenlängen ausgewählt wird, N Gruppen aus X Ensembles von im Mittel r/X Verzögerungsleitungen (14), wobei die Gruppen jeweils mit jedem Verlagerungsmodul (12) verbunden sind, und N für die Wellenlänge empfindliche passive Verzweigungsmittel (110), die jeweils am Ausgang jedes Verlagerungsmoduls angeordnet sind, um jedes von diesem Modul ausgehende Paket in Abhängigkeit seiner verlagerten Wellenlänge zu einem der verbundenen r Verzögerungsleitungen (14) zu leiten, die zweite Stufe (20) umfaßt: r Blöcke aus Y Wellenlängenverlagerungsmodulen (22, 202), von denen jedes am Eingang mit dem Ausgang der r Verzögerungsleitungen (14), die jeweils von r Eingängen kommen, gekoppelt ist, wobei jedes der r · Y Verlagerungsmodule (202) der zweiten Stufe angepaßt ist, um die Wellenlänge eines optischen Pakets, das so von einer Verzögerungsleitung (14) kommend empfangen wird, auf eine Wellenlänge zu verlagern, die aus P/X möglichen Wellenlängen ausgewählt wird, r · Y Gruppen von P/X optischen Leitungen (24), die jeweils am Eingang mit jedem Verlagerungsmodul der zweiten Stufe und am Ausgang mit P/X Ausgängen der Vermittlungseinrichtung verbunden sind, und r · Y für die Wellenlänge empfindliche passive Verzweigungsmittel (210), die jeweils am Ausgang jedes Verlagerungsmoduls (202) der zweiten Stufe (20) angeordnet sind, um jedes von diesem Modul ausgehende Paket in Abhängigkeit seiner verlagerten Wellenlänge zu einer der verbundenen P/X optischen Leitungen (24) zu leiten, und die dritte Stufe (30) P passive Koppler oder Multiplexer (32) mit P/X Eingängen und einem Ausgang umfaßt.

23. Vermittlungseinrichtung nach Anspruch 22, **dadurch gekennzeichnet, daß** jeder Eingang (E) einen und nur einen Zugang zu jedem Block (23) der zweiten Stufe besitzt.

24. Vermittlungseinrichtung nach einem der Ansprüche 1 bis 23, **dadurch gekennzeichnet, daß** jedes Eingangsmodul (12) die Wahl zwischen X Ensembles von Ausgängen hat, d.h. X Ensembles von Verzögerungsleitungen (14), wobei die X Ensembles von Ausgängen oder Verzögerungsleitungen jeweils über Module (22) der zweiten Stufe, eine Leitung (24) und Ausgangsmodule (32) zu jeweils X verschiedenen Gruppen von P/X Ausgängen S führen können.

25. Vermittlungseinrichtung nach einem der Ansprüche 1 bis 24, **dadurch gekennzeichnet, daß** die N/X ersten Module (22) der zweiten Stufe (20) einem ersten Typ von Ausgängen (S) zugewiesen sind, die N/X folgenden Module (22) der zweiten Stufe (20) einem zweiten Typ von Ausgängen zugewiesen sind und so weiter für X Typen von Ausgängen.

26. Vermittlungseinrichtung nach einem der Ansprüche 1 bis 25, **dadurch gekennzeichnet, daß** die Verzögerungsleitungen (14) aus Glasfasern gebildet sind.

27. Vermittlungseinrichtung nach einem der Ansprüche 1 bis 26, **dadurch gekennzeichnet, daß** jede Verzögerungsleitung (14) einer ganzen Zahl der Paketzeit entspricht.

28. Vermittlungseinrichtung nach einem der Ansprüche 1 bis 27, **dadurch gekennzeichnet, daß** für eine Vermittlungseinrichtung, die jeweils 16, 32 und 64 Eingänge/Ausgänge umfaßt, die Größe bestimmter verwendeter Verzögerungsleitungen (14) mindestens jeweils gleich 41, 43 und 44 der Paketzeit ist.

29. Vermittlungseinrichtung nach einem der Ansprüche 1 bis 28, **dadurch gekennzeichnet, daß** jedes Wellenlängenkonvertierungsmodul (100, 200) durch Kombination eines optischen Verstärkers (102, 202) und eines Ensembles von Lasern (104, 204) gebildet wird, die in Abhängigkeit des gewünschten Routings gesteuert werden.

30. Vermittlungseinrichtung nach einem der Ansprüche 1 bis 29, **dadurch gekennzeichnet, daß** die passiven Verzweigungsmittel (110, 210) aus einem Beugungsgitter gebildet sind.

31. Vermittlungseinrichtung nach einem der Ansprüche 1 bis 30, **dadurch gekennzeichnet, daß** die Anzahl r der Blöcke aus Y Modulen (22) der zweiten Stufe (20) größer oder gleich 2 · m X-1 ist, wobei m die mittlerer zeitliche Tiefe pro Eingang in Paketzeit darstellt, mit der die Vermittlungseinrichtung Konflikte des Routings lösen muß.

32. Vermittlungseinrichtung nach einem der Ansprüche 1 bis 31, **dadurch gekennzeichnet, daß** die Header der Pakete in der ersten Stufe (10) gelöscht werden und der zweiten Stufe (20) wiedergeschrieben werden.

33. Vermittlungseinrichtung nach einem der Ansprüche 13, 15 oder 22, **dadurch gekennzeichnet, daß** X = 2 ist und jedes Modul (22) der zweiten Stufe (20) jeweils mit einem geradzahligen Ausgang oder einem ungeradzahligen Ausgang der Vermittlungseinrichtung verbunden ist.

34. Vermittlungseinrichtung nach einem der Ansprüche 13, 15 oder 22, **dadurch gekennzeichnet, daß** X = 1 ist und jedes Modul (22) der zweiten Stufe (20) mit jedem Ausgang der Vermittlungseinrichtung verbunden ist.

35. Vermittlungseinrichtung nach einem der Ansprüche 1 bis 34, **dadurch gekennzeichnet, daß** die Eingangsstufe (10) ebenso räumlich ist und die Module (12) der Eingangsstufe (10) nur mit bestimmten Modulen (22) der zweiten Stufe (20) verbunden sind.

36. Vermittlungseinrichtung nach einem der Ansprüche 1 bis 35, **dadurch gekennzeichnet, daß** die zweite Stufe (20) r Blöcke aus Y = N/r Ensembles (22) umfaßt, von denen jedes ein Wellenlängenverlagerungsmodul (200) umfaßt, das z. B. aus einem optischen Verstärker (202) gebildet ist, der einzig durch eine Faser (201) mit den Ausgängen der verbundenen r Verzögerungsleitungen (14) gekoppelt ist, die von der ersten Stufe (10) über einen Koppler bzw. Multiplexer (220) mit r Eingängen und einem Ausgang kommen.

**37.** Vermittlungseinrichtung nach einem der Ansprüche 1 bis 36, **dadurch gekennzeichnet, daß** P = N.

**38.** Vermittlungseinrichtung nach einem der Ansprüche 1 bis 36, **dadurch gekennzeichnet, daß** P>N.

**39.** Vermittlungseinrichtung nach einem der Ansprüche 1 bis 39, **dadurch gekennzeichnet, daß** r=N/X.

**40.** Vermittlungseinrichtung nach einem der Ansprüche 1 bis 39, **dadurch gekennzeichnet, daß** jedes Modul i der zweiten Stufe (20) einen Ausgangstyp $x_i$ adressiert, der definiert ist durch

$$x_i = E((i-1) \cdot X/N) + 1 \qquad (x_i = 1, X).$$

**41.** Vermittlungseinrichtung nach einem der Ansprüche 1 bis 40, **dadurch gekennzeichnet, daß** jedes Modul i der zweiten Stufe (20) zu $s_i$ Ausgängen gelangen kann, die definiert sind durch

$$s_i = x_i + (q-1) \cdot X$$

$$(q = 1, P/X),$$

wenn man interdigitale Ausgangstypen betrachtet, z.B. zwei Typen von alternierenden jeweils geraden und ungeraden Ausgängen, oder

$$s_i = (x_i - 1)(P/X) + q \qquad (q = 1, P/X),$$

wenn man annimmt, daß jeder Ausgangstyp einer kontinuierlichen Folge von Ausgängen entspricht, nicht interdigitalisiert von einem Ausgangstyp zum nächsten.

**42.** Vermittlungseinrichtung nach einem der Ansprüche 1 bis 41, **dadurch gekennzeichnet, daß** jedem Modul i der zweiten Stufe (20) r Verzögerungsleitungen (14) vorangehen, die verbunden sind mit den Eingängen:

$$k = [i - p \cdot Y - 1]_N + 1 \qquad (p = 0, r-1).$$

**43.** Vermittlungseinrichtung nach einem der Ansprüche 1 bis 42, **dadurch gekennzeichnet, daß** jeder Eingang k der Vermittlungseinrichtung Module i der zweiten Stufe über Vermittlungsleitungen adressiert:

$$i = [k + p \cdot Y - 1]_N + 1$$

$$(p = 0, r-1),$$

wobei die Länge der Verzögerungsleitungen mit p wächst und einer ganzen Zahl von Paketen zwischen 1 und L entspricht.

# FIG.1

# FIG.2

# FIG.3

$E_1$

$E_2$

$E_N$

1 ←————————————————→ L

FIG.4

Probabilité
d'occupation

File d'attente

FIG.5

Probabilité
d'occupation

$10^{-2}$
$10^{-3}$
$10^{-4}$
$10^{-5}$
$10^{-6}$
$10^{-7}$
$10^{-8}$
$10^{-9}$
$10^{-10}$

0   10   20   30   40   50

File d'attente

EP 0 711 093 B1

## FIG.6

## FIG.7

## FIG.8